# EUROPEAN PATENT APPLICATION

(11) **EP 4 818 131 A1**
(43) Date of publication of application: **07.10.2026**
(21) Application number: 25167530.2
(22) Date of filing: 31.03.2025
(51) Int. Cl.: C03C 3/091, C03C 4/00, C03C 17/23, C03C 17/30, C03C 23/00, C03B 32/00, A61J 1/14, C03C 4/02, C03C 4/20

(54) **AMBER PHARMACEUTICAL GLASS CONTAINER AND PRODUCTION METHOD THEREFORE**

(71) Applicant: SCHOTT Pharma Schweiz AG, 9001 St. Gallen (CH); SCHOTT Pharma AG & Co. KGaA, 55122 Mainz (DE)
(72) Inventor: KLEINHEINZ, David, 9001 St. Gallen (CH); HUMBERTJEAN, Alexander, 79379 Müllheim (DE); WÖHRLE, Norbert, 79379 Müllheim (DE); KUMMER, Hanspeter, 79379 Müllheim (DE); MUTLU, Fatih, 79379 Müllheim (DE)
(74) Representative: Schott Corporate IP

(57) **Abstract**

The present invention refers to an amber pharmaceutical glass container wherein the amber glass has a transmission throughout a wavelength range of from 290 nm to 450 nm of 25 % or less, measured at a thickness of 1.0 mm and a transmission throughout a wavelength range from 590 nm to 610 nm of 45 % or more measured at a thickness of 1.0 mm as well as to a method for producing such an amber pharmaceutical glass container and to the use of such an amber pharmaceutical container for storing a pharmaceutical or cosmetical composition or drug and preferably for storing antibody-drug-conjugates.

## Description

### Field of the invention

The present invention refers to an amber pharmaceutical glass container wherein the amber glass has a transmission throughout a wavelength range of from 290 nm to 450 nm of 25 % or less, measured at a thickness of 1.0 mm and a transmission throughout a wavelength range from 590 nm to 610 nm of 45 % or more measured at a thickness of 1.0 mm as well as to a method for producing such an amber pharmaceutical glass container and to the use of such an amber pharmaceutical container for storing a pharmaceutical or cosmetical composition or drug and preferably for storing antibody-drug-conjugates.

### Prior art

Pharmaceuticals as well as chemicals are often provided in form of solutions, suspensions or emulsions and have to be bottled and stored in containers. While oral administered drugs allow for more flexibility in the storage and the containments for storage, parenteral drugs are often directly administered to the blood of a patient and, therefore, the containment has to have a significant, high quality. Often glass containers are used, and especially borosilicate glass containers, that must have certain properties and meet certain limit values in terms of physical and chemical resistance, as well as strength and glass composition.

However, in recent years, many kinds of new drugs have been created through rapid advances in pharmacology, and there is an increasing number of drugs and substances that are significantly expensive such as anticancer drugs, that are highly unstable to ultraviolet light and, therefore, need to be protected from UV light.

Often colored containers such as amber colored glass containers are used for storing such substances that have a function of blocking ultraviolet light so that a pharmaceutical included therein is not altered through irradiation with light. However, in addition to that it is also important that the containers that are used for bottling and storing are at least partially permeable to visible light so that a visual inspection of such containers and the bottled and stored compounds such as the pharmaceuticals and drugs is possible. These requirements have been defined in several countries by different legal requirements. For example, in the US and Europe there are particular requirements for such containers as set out in the United States Pharmacopeia (USP <660>) and European Pharmacopoeia (E.P.3.2.1) In Japan such requirements have been defined in the (JP 7.01). However, the requirements as set out in these documents are not congruent and sometimes even contrary. Therefore, the amber pharmaceutical glass containers available on the market are mainly produced only for the European market or only for the US market or only the Japanese market.

Therefore, there is an ongoing need for improved amber pharmaceutical glass containers. Especially, it is desirable to provide pharmaceutical glass containers that on the one hand have a function of blocking ultraviolet light and on the other hand have a certain transmittance in the visible range to allow a visual inspection of the empty and filled containers. In particular, it is desirable that such containers meet the requirements for UV blocking as well as transmission in the visible range according to the most important standards, in particular in the standards relevant for the US, EU and JP.

In this context it is especially desirable to use glass types and coloring systems that are already known and that are approved in the pharmaceutical sector. Furthermore, it is desirable that such pharmaceutical glass containers fulfil further requirements in terms of physical and chemical resistance and that they meet the relevant standards for such containers. In addition, it is desirable that such containers can be manufactured on already known machines, without massive conversions or cost-intensive new acquisitions.

### Disclosure of the invention

The foregoing and other objects are solved by the subject-matter as defined herein in the independent claims.

According to one aspect of the present invention a method for producing an amber pharmaceutical glass container is provided, the method comprising the steps of a) providing an amber glass tube, b) hot forming the amber glass tube into an amber glass container , c) heating the amber glass container at a temperature of between Tg +5 °C to Tg +50 °C, and d) cooling the heated amber glass container of step c) to a temperature of between Tg -60 °C to Tg -10 °C at a speed of between 0.8 °C/s to 4 °C/s per 1.0 mm wall thickness of the amber glass container to obtain an amber pharmaceutical glass container.

According to another aspect of the present invention an amber pharmaceutical glass container is provided, wherein the amber glass has a transmission throughout a wavelength range of from 290 nm to 450 nm of 25 % or less, measured at a thickness of 1.0 mm and has a transmission throughout a wavelength range from 590 nm to 610 nm of 45 % or more measured at a thickness of 1.0 mm.

According to another aspect of the present invention, the amber pharmaceutical container according to the present invention is used for storing a pharmaceutical or cosmetical composition or drug and preferably for storing antibody-drug-conjugates.

According to another embodiment of the present invention, Fe₂O₃ and TiO₂ is used in a borosilicate glass as temperature dependent coloring system, wherein the Fe₂O₃ and TiO₂ are used in a ratio of between 1:3.00 to 1:5.00, preferably in a ratio of 1:3.50 to 1:4.50 and preferably in a ratio of between 1:3.80 to 1:4.00, based on the weight of the oxides.

The inventors surprisingly found that by the inventive method it is possible to prepare amber pharmaceutical glass containers that meet the requirements for UV blocking as well as transmission in the visible range according to the most important standards, namely USP <660> and E.P.3.2.1. as well as JP requirements JP 7.01. More precisely, by the inventive method it is possible to provide amber pharmaceutical glass containers that have a transmission throughout a wavelength range of from 290 nm to 450 nm of 25 % or less, measured at a thickness of 1.0 mm in order to provide UV blocking and have a transmission throughout a wavelength range from 590 nm to 610 nm of 45 % or more measured at a thickness of 1.0 mm in order to be suitable for visual inspection. One advantage of the inventive method is that known amber glass tubes with a known coloring system, namely a Fe₂O₃ and TiO₂ coloring system can be used. The inventors especially found that Fe₂O₃ and TiO₂ can be used in a borosilicate glass as temperature dependent coloring system, especially in the ratios as given above. Therefore, known glass types and known coloring systems can be used in the inventive method for producing the inventive pharmaceutical glass containers, wherein these glass types and coloring systems have already been approved in the pharmaceutical sector.

Furthermore, by the inventive method known amber glass tubes can be used, as well as known and already available equipment since no specialized machines or equipment has to be provided. Therefore, the inventors found that the above method is easy to handle and economic, since existing apparatuses can be used to a large extent and only require a small amount of conversion. Furthermore, the time for preparing the inventive pharmaceutical glass containers is not actually affected.

Furthermore, the inventors surprisingly found that by the inventive method it is possible to avoid negative effects on the physical and chemical resistance of such inventive pharmaceutical glass containers such that these containers meet the relevant standards. Especially, by the above method it is possible to obtain amber pharmaceutical glass containers that meet the requirements for UV blocking as well as transmission in the visible range according to the most important standards, namely USP <660> and E.P.3.2.1. as well as JP requirements JP 7.01 and are stable enough to be used in the pharmaceutical sector. Especially the ring tension of the obtained amber pharmaceutical glass containers is 1 Friedelgrad or less so the obtained containers can be used in the pharmaceutical sector.

Advantageous embodiments of the present invention are defined in the corresponding sub-claims.

According to one embodiment, the heating step c) is performed at a temperature of between Tg +8 °C to Tg +45 °C, preferably at a temperature of between Tg +10 °C to Tg +35 °C, and most preferably at a temperature of between Tg +12 °C to Tg + 30 °C.

According to another embodiment, the heating step c) is performed between 5 to 500 sec., more preferably between 10 to 300 sec, and even more preferably between 12 to 100 sec.

According to another embodiment, the cooling step d) is performed by i) cooling the heated amber glass container of step c) to a temperature of between Tg -50 °C to Tg -15 °C, preferably to a temperature of between Tg -40 °C to Tg -20 °C and/or ii) cooling the heated amber glass container of step c) at a speed of between 0.9 °C/s to 3 °C/s, preferably at a speed of 1.0 °C/s to 2.5 °C/s, and most preferably at a speed of between 1.0 °C/s to 2.0 °C/s, per 1.0 mm wall thickness of the amber glass container.

According to another embodiment, the amber glass tube provided in step a) has a transmission throughout a wavelength range of from 290 nm to 450 nm of 15.0% or less, preferably 14.5% or less, measured at a thickness of 1.0 mm and has a transmission throughout a wavelength range from 590 nm to 610 nm of 50.0 % or more, preferably 52.5 % or more measured at a thickness of 1 mm.

According to another embodiment, the amber glass tube provided in step a) is an amber borosilicate glass tube, preferably an amber borosilicate glass tube comprising Fe₂O₃ and TiO₂ in the glass composition and most preferably the amber glass tube has a glass composition comprising 60 to 85 wt.-% SiO₂, 5 to 20 wt.-% B₂O₃, 1 to 10 wt.-% Al₂O₃, 0.25 to 2 wt.-% Fe₂O₃, 0.5 to 10 wt.-% TiO₂, 2 to 10 wt.-% Na₂O, 0 to 5 wt.-% K₂O, 0 to 2 wt.-% BaO, 0 to 2 wt.-% CaO, based on all oxides present in the glass composition.

According to another embodiment, the inventive amber pharmaceutical glass container has
i) a hydrolytic resistance characterized by an extracted Na₂O equivalent in µg per g glass determined according to ISO 719:2020-09 of not more than 62 µg/g, preferably of not more than 31 µg/g and/or
ii) a neck squeeze test load of at least 1100 N, preferably at least 1500 N, even more preferably at least 2000 N, and most preferably at least 3000 N and/or
iii) a ring tension of less than 5 Friedelgrad, preferably less than 4 Friedelgrad even more preferably less than 3 Friedelgrad, even more preferably less than 2 Friedelgrad and most preferably 1 Friedelgrad or less and/or
iv) a burst pressure from 20 to 80 bar, preferably from 30 to 70 bar and most preferably from 40 to 60 bar and/or
v) an axial load pressure from 1500 to 6000 N, preferably from 2000 to 5000 N and most preferably from 2500 to 4000 N.

According to another embodiment, the amber glass of the amber pharmaceutical glass container has a glass composition comprising 60 to 85 wt.-% SiO₂, 5 to 20 wt.-% B₂O₃, 1 to 10 wt.-% Al₂O₃, 0.25 to 2 wt.-% Fe₂O₃, 0.5 to 10 wt.-% TiO₂, 2 to 10 wt.-% Na₂O, 0 to 5 wt.-% K₂O, 0 to 2 wt.-% BaO, 0 to 2 wt.-% CaO, based on all oxides present in the glass composition.

According to another embodiment the amber pharmaceutical glass container is a vial, preferably a 2R, 4R, 6R, 10R, 15R or 20R vial according to ISO 8362-1:2018 or a syringe, preferably a 0.5 ml, 1.1 ml, 1.5 ml, 2 ml, 2.25 ml, 3 ml or 5 ml syringe according to ISO 11040-4:2024 or a cartridge, preferably a 1.5ml, or 3ml cartridge according to ISO 13926-1:2020-02 or a 5ml, or 7.3ml, or 10 ml or 20 ml cartridge that has the same dimensions as defined in ISO 13926-1:2020-02 with the exception of the length and the diameter of the cartridge.

According to another embodiment the amber pharmaceutical glass container is
i) a 2R or 4R vial according to ISO 8362-1:2018, having a transmission throughout a wavelength range of from 290 nm to 450 nm of 15% or less, measured at a thickness of 1.0 mm and a transmission throughout a wavelength range from 590 nm to 610 nm of 45 % or more measured at a thickness of 1.0 mm or
ii) a 6R or 8R vial according to ISO 8362-1:2018, having a transmission throughout a wavelength range of from 290 nm to 450 nm of 13% or less, measured at a thickness of 1.0 mm and a transmission throughout a wavelength range from 590 nm to 610 nm of 45 % or more measured at a thickness of 1.0 mm or
iii) a 10R or 15R vial according to ISO 8362-1:2018, having a transmission throughout a wavelength range of from 290 nm to 450 nm of 12% or less, measured at a thickness of 1.0 mm and a transmission throughout a wavelength range from 590 nm to 610 nm of 45 % or more measured at a thickness of 1.0 mm or
iv) a 20R vial according to ISO 8362-1:2018, with the exception that the wall thickness s₁ of the of the vial is 1.0 mm, having a transmission throughout a wavelength range of from 290 nm to 450 nm of 10% or less, measured at a thickness of 1.0 mm and a transmission throughout a wavelength range from 590 nm to 610 nm of 45 % or more measured at a thickness of 1.0 mm.

According to another embodiment the amber pharmaceutical glass container comprises a coating on at least a part of the surface of that container, preferably on the interior surface of that container, and preferably the coating is a hydrophobic coating comprising as significant component
i) a compound comprising the elements Si, C, O, and H along with further elements, the further elements having a content of less than 10 at%, said compound comprising a composition SiOₓ-C_{y}H_{z}, in which x lies in the range of 0.6 to 0.9, y lies in the range of 1.2 to 3.3, and z lies in the range of 0.0 to 6.0 or
ii) SiO₂.

It should be understood that for the purpose of the present invention, the following terms have the following meaning.

An "amber pharmaceutical glass container" in the meaning of the present invention is a pharmaceutical glass container having an amber color. An amber color in the meaning of the present invention refers to a color spectrum that is commonly found in a range of yellow-orange-brown-red colors. The color can be defined by the CIE 1931 color space, which represents a color impression by a combination of three values, namely the x-value, the y-value and the z-value (chromaticity coordinates). According to the present invention it is determined analogous to DIN 5033 using illuminant "C" at 6770 K for the CIE standard observer within a 2° arc of the fovea (CIE 1931 2° Standard Observer). Briefly, X, Y and Z standard spectral values are taken from the table of the CIE 1931 color space system and multiplied with the measured transmission values in order to obtain the respective tristimulus values. The chromaticity coordinates x, y and z that are defining the color location or color position within the color space are obtained by normalizing the sum x + y + z to be equal to 1. Thus, x-value, y-value and z-value are positive values and the sum x + y + z = 1. The CIE 1931 color space chromaticity diagram represents the color space, wherein the x-axis refers to the x-values and the y-axis refers to the y-values. The z-value can be inferred from any given pair of x-value and y-value by calculating z = 1 - x - y. The point x = y = z = 1/3 represents the so called "white point" that defines the color "white". High x-values represent reddish colors. High y-values represent greenish colors. High z-values represent bluish colors. Each chromaticity is represented as a particular color location in color space. Additive mixed colors have their color location on the straight connecting line of the components. For exactly characterizing the color stimulus specification, the tristimulus value Y is used as a brightness reference value (DIN 5033, Part 1) by dividing the sum of all y-values by a ratio (=21.293658). Thereby the resulting value is normalized to a maximum of 100. This value indicates whether the glass is brighter or darker for the human eye as compared to a comparative probe. The x-value, y-value and z-value are positive values and the sum x + y + z = 1. The CIE 1931 color space chromaticity diagram represents the color space, wherein the x-axis refers to the x-values and the y-axis refers to the y-values. The z-value can be inferred from any given pair of x-value and y-value by calculating z = 1 - x - y. The point x = y = z = 1/3 represents the so called "white point" that defines the color "white". High x-values represent reddish colors. High y-values represent greenish colors. High z-values represent bluish colors. An amber color according to the present invention refers to x-values between 0.4140 and 0.4240 and y-values between 0.4065 and 0.4120 according to the CIE 1931 color space at a sample thickness of 1 mm.

A "pharmaceutical glass container" in the meaning of the present invention is a container made of glass that can be used for bottling and storing pharmaceutical and cosmetical substances, preferably liquids such as solutions, suspensions and emulsions. According to a preferred embodiment of the present invention, the pharmaceutical glass container is a vial or a syringe or a cartridge.

A vial in the meaning of the present invention is a closable container that might be closed or sealed, for example, by crimping. A cartridge in the meaning of the present invention is a closable container that might be closed or sealed on two ends, for example by crimping on one end and inserting a piston or a bulb on the other end. A syringe in the meaning of the present invention is a tube with a nozzle and together with a piston or bulb can be used for sucking in and ejecting liquids and might fitted with a hollow needle for injecting or withdrawing fluids.

If this disclosure refers to a length of any element, a width of any element or a height of any element, for example, refers to a length of a glass tube lₐ, an inner diameter dᵢ and outer diameter dₒ of a glass tube and a wall thickness WT of a glass tube, it shall be understood that with reference to a Cartesian coordinate system, length always refers to a maximal extension in the x-direction, width always refers to a maximal extension in the y-direction, and height always refers to a maximal extension in the z-direction, wherein the x-direction, y-direction and z-direction are oriented pairwise perpendicular to each other. Measurement of the lengths, the width or a height can be done for example by a microscope with calibrated size scala or a light box with a lineal.

The "thickness" or "wall thickness" of the amber glass container or the amber pharmaceutical glass container refers to the thickness of the glass of the amber glass container or the amber pharmaceutical glass container measured at the body of the container, for example the body of the vial or syringe or cartridge. In detail, the thickness refers to the value s₁ defined in the ISO 8362-1:2018 or in ISO 11040-4:2024 (for vials or syringes) or to the value (d₁-d₂)/2 in ISO 13926-1:2020-02 (for cartridges).

The term "ultraviolet radiation" or "ultraviolet light" often abbreviated with "UV" or "UV-light" is known as electromagnetic radiation shorter than that of visible light, but longer than X-rays. UV radiation is naturally present in sunlight and constitutes about 10% of the total electromagnetic radiation output from the sun. Commonly the UV spectrum refers to different wavelength ranges such as UV-A, UV-B, UV-C, or NUV, MUV, or FUV. When in the following reference is made to the UV-spectrum it refers to a wavelength range of from 290 nm to 450 nm, if not otherwise mentioned.

The "transmission" in the meaning of the present invention is the transmission in the wavelength range of 290 to 450 nm as well as 590 to 610 nm that can be measured with a spectrophotometer.

The term "coating" in the meaning of the present invention refers to a layer of material that is applied at least partly to the surface of the amber pharmaceutical glass container. It can be applied in various forms, such as liquids, gases, or solids, and can serve multiple purposes, for example, protection, decoration or functional enhancement such as improved scratch resistance, friction reduction or chemical and physical stability.

A "liquid" in the meaning of the present invention is a substance that is fluid at room temperature and can flow freely. A "solid" in the meaning of the present invention is a substance that is not liquid and not gaseous at room temperature but has a defined shape and volume. The room temperature is defined as a temperature of 20 °C at an atmospheric pressure of 101325 Pa (1013.25 hPa).

The term "normal condition" in the meaning of the present invention refers to the room temperature of 20 °C (293.15 K, 68 °F) and an absolute atmospheric pressure of 1 atm (14.696 psi, 101.325 kPa).

Where the term "comprising" is used in the present description and claims, it does not exclude other elements. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

Where an indefinite or definite article is used when referring to a singular noun, e.g. "a", "an" or "the", this includes a plural of that noun unless something else is specifically stated.

Terms like "obtainable" or "definable" and "obtained" or "defined" are used interchangeably. This e.g. means that, unless the context clearly dictates otherwise, the term "obtained" does not mean to indicate that e.g. an embodiment must be obtained by e.g. the sequence of steps following the term "obtained" though such a limited understanding is always included by the terms "obtained" or "defined" as a preferred embodiment.

### Detailed description

According to the present invention, a method for producing an amber pharmaceutical glass container is provided. The method comprising the steps of a) providing an amber glass tube, b) hot forming the amber glass tube into an amber glass container, c) heating the amber glass container at a temperature of between Tg +5 °C to Tg +50 °C, and d) cooling the heated amber glass container of step c) to a temperature of between Tg - 60 °C to Tg -10 °C at a speed of between 0.8 °C/s to 4 °C/s per 1.0 mm wall thickness of the amber glass container to obtain an amber pharmaceutical glass container. In the following details and preferred embodiments of the inventive method will be set out in more detail. It is to be understood that these technical details and embodiments also apply to the inventive amber pharmaceutical glass containers, and the inventive use of the inventive amber pharmaceutical glass container for storing a pharmaceutical or cosmetical composition or drug. Furthermore, these technical details and embodiments also apply to the inventive use of Fe₂O₃ and TiO₂ in a borosilicate glass as temperature dependent coloring system.

Preferred embodiments of the invention are shown in the figures and will be explained in more detail in the following description, wherein identical reference signs refer to identical or similar components or elements.
Figure 1 shows the schematic drawing of a vial with a wall thickness s₁
Figure 2 shows the schematic drawing of a syringe with a wall thickness s₁
Figure 3 shows the schematic drawing of a cartridge with a wall thickness defined by the outer diameter d₁ and the inner diameter d₂

### Method for producing the amber pharmaceutical glass container

According to one aspect of the present invention a method for producing an amber pharmaceutical glass container is provided, wherein the method comprising the steps of
a) providing an amber glass tube,
b) hot forming the amber glass tube into an amber glass container,
c) heating the amber glass container at a temperature of between Tg +5 °C to Tg +50 °C, and
d) cooling the heated amber glass container of step c) to a temperature of between Tg -60 °C to Tg -10 °C at a speed of between 0.8 °C/s to 4 °C/s per 1.0 mm wall thickness of the amber glass container to obtain an amber pharmaceutical glass container.

### Method step a)

According to method step a) an amber glass tube is provided. The amber glass tube is a tube made of glass with an amber color. The amber glass tube has to be suited for the pharmaceutical sector and, therefore, has to be of sufficiently high quality, especially in terms of composition, dimensions and defect appearance. Such glass tubes are often prepared by the Danner-tube or Vello drawing process The skilled person knows how to choose such glass tubes, dependent on the pharmaceutical container that should be produced by the inventive method. Such amber glass tubes are known to the skilled person and are commercially available, for example from SCHOTT under the trade name FIOLAX^{®} amber.

The amber glass tube provided in step a) can be characterized by an inner diameter dᵢ, an outer diameter dₒ, a wall thickness WT and a length lₐ along its longitudinal axis.

According to one embodiment, the glass tube may have an outer diameter dₒ from 5 mm to 55 mm, preferably from 8 mm to 40 mm, more preferably from 9 mm to 35 mm, even more preferably from 10 mm to 30 mm, and most preferably from 11 mm to 25 mm, for example, the glass tube may have an outer diameter dₒ of 16 mm, or 22 mm or 24 mm.

Additionally, or alternatively, the glass tube may have an inner diameter dᵢ from 3 mm to 53 mm, preferably from 6 mm to 38 mm, more preferably from 7 mm to 33 mm, even more preferably from 8 mm to 28 mm, and most preferably from 9 mm to 23 mm, for example, the glass tube may have an inner diameter dᵢ of 14 mm, or 20 mm or 22 mm.

Additionally, or alternatively, the glass tube may have a wall thickness WT from 0.4 mm to 2.5 mm, preferably from 0.8 mm to 2.0 mm, more preferably from 0.9 mm to 1.5 mm, and most preferably of 1.0 mm.

Additionally, or alternatively, the glass tube may have a length lₐ from 500 to 3500 mm, preferably from 800 to 3000 mm, and most preferably from or 1200 to 2000 mm.

According to a preferred embodiment of the present invention, the glass tube may have an outer diameter dₒ from 5 mm to 55 mm, an inner diameter dᵢ from 3 to 53 mm, and a length lₐ from 500 to 3500 mm. According to another preferred embodiment the glass tube may have an outer diameter dₒ from 5 mm to 55 mm, an inner diameter dᵢ from 3 to 53 mm, and a length lₐ from 500 to 3500 mm and a wall thickness WT from 0.4 mm to 2.5 mm and most preferably of 1.0 mm.

According to an exemplary embodiment, the glass tube may have an outer diameter dₒ from 16 mm to 30 mm, an inner diameter dᵢ from 14 to 28 mm, and a length lₐ of 1500 mm and a wall thickness WT of 1.0 mm.

The skilled person knows how to measure the outside diameter, the inside diameter, the wall thickness and the length of the glass tubes and selects suitable measuring equipment depending on the type and size of the object to be measured and on the accuracy with which the object and thus also the tolerance are to be determined. Such measuring equipment is commercially available, e.g. micrometers, calipers or two-point probe heads, or optical measuring instruments, e.g. digital measuring projectors. Digital measuring projectors are available from companies such as Keyence.

Additionally, or alternatively, the amber glass tube provided in step a) has a transmission throughout a wavelength range of from 290 nm to 450 nm of 18.0% or less, preferably of 15.0% or less and most preferably of 14.5% or less, measured at a thickness of 1.0 mm. Additionally, or alternatively, the amber glass tube provided in step a) has a transmission throughout a wavelength range of from 290 nm to 450 nm of at least 10.0%, preferably of at least 12.0% and most preferably of at least 13.0 %, measured at a thickness of 1.0 mm. According to a preferred embodiment, the amber glass tube provided in step a) has a transmission throughout a wavelength range of from 290 nm to 450 nm of between 10.0 % to 18.0%, preferably of between 12.0% to 15.0% and most preferably of between 13.0 % to 14.5%, measured at a thickness of 1.0 mm.

Additionally, or alternatively, the amber glass tube provided in step a) has a transmission throughout a wavelength range of from 590 nm to 610 nm of 45.0 % or more, preferably of 50.0 % or more and most preferably of 52.5 % or more measured at a thickness of 1 mm. Additionally, or alternatively, the amber glass tube provided in step a) has a transmission throughout a wavelength range of from 590 nm to 610 nm of less than 65.0 %, preferably of less than 60.0 % and most preferably of less than 55.0 %, measured at a thickness of 1 mm. According to a preferred embodiment, the amber glass tube provided in step a) has a transmission throughout a wavelength range of from 590 nm to 610 nm of between 45.0 % to 65.0%, preferably of between 50.0% to 60.0% and most preferably of between 52.5 % to 55.0 %, measured at a thickness of 1.0 mm.

According to a preferred embodiment of the present invention, the amber glass tube provided in step a) has a transmission throughout a wavelength range of from 290 nm to 450 nm of between 10.0 % to 18.0%, preferably of between 12.0% to 15.0% and most preferably of between 13.0 % to 14.5%, measured at a thickness of 1.0 mm and has a transmission throughout a wavelength range of from 590 nm to 610 nm of between 45.0 % to 65.0%, preferably of between 50.0% to 60.0% and most preferably of between 52.5 % to 55.0 %, measured at a thickness of 1.0 mm.

According to another preferred embodiment of the present invention, the amber glass tube provided in step a) has an average linear coefficient of thermal expansion measured in the range of 20°C to 300°C (CTE) between 3.0 and 8.0 * 10⁻⁶ K⁻¹, or between 3.5 and 7.0 * 10⁻⁶ K⁻¹, or between 4.0 and 6.0 * 10⁻⁶ K⁻¹. According to a preferred embodiment the CTE is between 5.2 * 10⁻⁶ K⁻¹ to 5.6 * 10⁻⁶ K⁻¹. It is beneficial for the amber glass tube to have a CTE within the above ranges, since such glasses tend to produce fewer stresses during hot forming, which leads to a more uniform product. The CTE may be measured according to DIN ISO 7991:1987.

According to another preferred embodiment of the present invention, the amber glass tube provided in step a) has a Tg between 300 and 750 °C, preferably between 400 and 700 °C, even more preferably between 500 and 600 °C and most preferably between 520 and 570 °C. The Tg in the meaning of the present invention is also known as the transformation temperature of the glass and is defined in ISO 7884-8:1987.

Additionally, or alternatively, the amber glass tube provided in step a), is an amber borosilicate glass tube, an amber alumino-borosilicate glass tube, an amber aluminosilicate or an amber lithium alumino-silicate (LAS) glass tube. According to a preferred embodiment, the amber glass tube provided in step a), is an amber borosilicate glass tube.

Preferably, the amber glass tube has a glass composition comprising the following components as indicated below:

| **Component** | **Content (wt.%)** |
|---|---|
| SiO₂ | 40 to 85 |
| Al₂O₃ | 0 to 25 |
| Na₂O | 0 to 18 |
| K₂O | 0 to 15 |
| MgO | 0 to 10 |
| B₂O₃ | 0 to 22 |
| Li₂O | 0 to 10 |
| ZnO | 0 to 5 |
| CaO | 0 to 16 |
| BaO | 0 to 12 |
| ZrO₂ | 0 to 5 |
| CeO₂ | 0 to 0.5 |
| SnO₂ | 0 to 3 |
| P₂O₅ | 0 to 15 |
| Fe₂O₃ | 0.25 to 3.0 |
| TiO₂ | 0.5 to 10 |
| SrO | 0 to 1 |
| F | 0 to 1 |
| Cl | 0 to 1 |

Where reference is made to "glass composition", it is to be understood as the oxide composition of the glass after melting the batch of glass raw materials and solidifying the melt to obtain the glass tube. This means that any volatile components are in the gaseous state and that the metals and metalloids are present in the glass compositions as oxides and/or fluorides and/or chlorides. In other words, the "glass composition" is the combination of oxides and/or fluorides and/or chlorides that can be obtained by melting a glass tube. When reference is made to the "wt.-%" in this context, this should be understood as weight percent based on the total weight of the glass composition if not indicated otherwise.

If this description refers to a glass composition which is essentially free of a component or does not contain a certain component or includes the hypothetical case of 0 weight% of that component, it is to be understood that this component may at most be present as an impurity. This means that it is not added in significant quantities and that it is not added intentionally. The term "component" refers to the elemental species as such as well as any molecule containing the element. Non-essential amounts are to be understood as less than 100 ppm, preferably less than 50 ppm, and most preferably less than 10 ppm, based on the weight percentage with respect to all intentionally added components.

Where reference is made to "ppm" in the context of solids or liquids, this should be understood as 'weight/weight' (w/w). Where reference is made to "ppm" in the context of gases, this should be understood as 'volume/volume' (vol/vol).

SiO₂ is a relevant network former that can be used in the glass composition. The glasses may comprise SiO₂ in an amount of at least 60 wt.%. More preferably, the glass comprises SiO₂ in an amount of at least 62 wt.%, at least 65 wt.%, at least 68 wt.%, more than 70 wt.%, or even more than 75 wt.%. However, the content of SiO₂ in the glass should also not be extremely high because otherwise the meltability may be compromised. The amount of SiO₂ in the glass may be limited to at most 85 wt.%, or at most 82 wt.%. In embodiments, the content of SiO₂ in the glass is from 60 to 85 wt.%, or from >65 to 75 wt.%.

B₂O₃ may be used in order to enhance the network by increasing the bridge-oxide in the glass via the form of [BO₄] tetrahedra. It also helps to improve the damage resistance of the glass. However, B₂O₃ should not be used in high amounts in the glass since it can decrease the ion-exchange performance. Furthermore, addition of B₂O₃ can significantly reduce the Young's modulus. The glass may comprise B₂O₃ in an amount of from 0 to 20 wt.%, preferably from 2.0 to 15 wt.%, more preferably from 5.0 to 10 wt.%.

P₂O₅ may be used in the glass of the invention in order to help lowering the melting viscosity by forming [PO₄] tetrahedra, which can significantly lower the melting point without sacrificing anti-crystallization features. Limited amounts of P₂O₅ do not increase geometry variation very much, but can significantly improve the glass melting, forming performance, and ion-exchanging (chemical toughening) performance. However, if high amounts of P₂O₅ are used, geometry expansion upon chemical toughening may be increased significantly. Therefore, the glasses may comprise P₂O₅ in an amount of from 0 to 4 wt.%, or from 0 to 2 wt.%. In some embodiments, the glass is free of P₂O₅.

It is believed that Al₂O₃ can easily form tetrahedra coordination when the alkaline oxide ratio content is equal or higher than that of Al₂O₃. [AlO₄] tetrahedra coordination can help building up more compact network together with [SiO₄] tetrahedra, which can result in a low geometry variation of the glass. [AlO₄] tetrahedra can also dramatically enhance the ion-exchange process during chemical toughening. Therefore, Al₂O₃ is preferably contained in the glasses in an amount of at least 0 wt.%, more preferably of more than 1 wt.%, more preferably of more than 4 wt.%. However, the amount of Al₂O₃ should also not be very high because otherwise the viscosity may be very high so that the meltability may be impaired. Therefore, the content of Al₂O₃ in the glasses is preferably at most 20 wt.%, at most 12 wt.%, or at most 10 wt.%. In preferred embodiments, the content of Al₂O₃ in the glasses is from 0 to 20 wt.%, from 1 to 12 wt.%, from 4 to 10 wt.%.

TiO₂ and Fe₂O₃ are used as coloring system in the amber glass tubes. However, TiO₂ can also form [TiO₄] and can thus help building up the network of the glass and may also be beneficial for improving the acid resistance of the glass. However, the amount of TiO₂ in the glass should not be very high. TiO₂ present in high concentrations may function as a nucleating agent and may thus result in crystallization during manufacturing. Preferably, the content of TiO₂ in the glasses is from 0.5 to 10.0 wt.%, more preferably from 1.0 to 8.0 wt.%, even more preferably from 3.0 to 6.0 wt.% and most preferably from 4.0 to 5.0 wt.%.

In addition to TiO₂, Fe₂O₃ is used in the amber glass tube as coloring system. According to a preferred embodiment of the present invention, the glass comprises iron, calculated as Fe₂O₃, in an amount of from 0.1 to 10.0 wt.%, more preferably from 0.5 to 5.0 wt.%, even more preferably from 0.7 to 2.0 wt.% and most preferably from 1.0 to 1.5 wt.%.

According to a preferred embodiment of the present invention, the amber glass tube provided in step a) comprises Fe₂O₃ and TiO₂ in the glass composition in a ratio of between 1:3.00 to 1:5.00, preferably in a ratio of 1:3.50 to 1:4.50 and most preferably in a ratio of between 1:3.80 to 1:4.00 based on the weight of the oxides.

In addition to the above coloring system, the glass might comprise a further color-enhancing component. According to a preferred embodiment of the present invention, the glass comprises MnO₂ as color-enhancing component, preferably in an amount of from 0.001 to 0.1 wt.%, preferably from 0.005 to 0.05 wt.% and most preferably from 0.008 to 0.015 wt.%.

According to a preferred embodiment the glass tube provided in step a) does not comprise further coloring agents or color enhancing components and preferably does not comprise Nd₂O₃, CoO, NiO, V₂O₅, CuO, CeO₂, Cr₂O₃.

ZrO₂ has the functions of lowering the CTE and improving the alkaline resistance of a glass. It may increase the melting viscosity, which can be suppressed by using P₂O₅. Like alkaline metals, Zr⁴⁺ is also a network modifier. Furthermore, ZrO₂ is a significant contributor for increased Young's modulus. Preferably, the content of ZrO₂ in the glasses is from 0 to 5 wt.%, preferably from 0 to 2 wt.%. According to a preferred embodiment the glass is free of ZrO₂.

Alkaline oxides R₂O (Li₂O + Na₂O + K₂O + Cs₂O) may be used as network modifiers to supply sufficient oxygen anions to form the glass network. Preferably, the content of R₂O in the glasses is more than 4 wt.%, preferably more than 6 wt.%. However, the content of R₂O in the glass should not be very high because otherwise chemical stability and chemical toughenability may be impaired. Preferably, the glasses comprise R₂O in an amount of at most 30 wt.%, at most 25 wt.%, or at most 20 wt.%. Other embodiments are free of alkaline oxides, or at least free of Na₂O, K₂O, Cs₂O and/or Li₂O.

Li₂O can help improving the Young's modulus and lowering CTE of the glass. Li₂O also influences the ion-exchange greatly. It was surprisingly found that Li-containing glass has a smaller geometry variation. However, the content of Li₂O should not be very high because otherwise chemical stability and chemical toughenability may be impaired. Therefore, the content of Li₂O in the glasses may be from 0 to 10 wt.%, or more preferably from 0 to 5 wt.%. According to a preferred embodiment the glass is free of Li₂O.

Na₂O may be used as a network modifier. However, the content of Na₂O should not be very high because otherwise chemical stability and chemical toughenability may be impaired. Preferably, the content of Na₂O in the glasses is from 0 to 15 wt.%, preferably from 2 to 15 wt.%. In preferred embodiments, the content of Na₂O in the glasses is at least 5 wt.%, at least 8 wt.%, or at least 10 wt.%.

K₂O may be used as a network modifier. However, the content of K₂O should not be very high because otherwise chemical stability and chemical toughenability may be impaired. Preferably, the content of K₂O in the glasses is from 0 to 15 wt.%, or from >0.5 to 7 wt.%. The glass may be free of K₂O.

Preferably, the glasses comprise more Na₂O than K₂O. Thus, preferably the molar ratio Na₂O/(Na₂O+K₂O) is from >0.5 to 1.0, from >0.6 to 1.0, from >0.7 to 1.0, or from >0.8 to 1.0.

The content of the sum of Li₂O and Na₂O in the glasses should not be very high. Preferably, the content of the sum of Li₂O and Na₂O in the glasses is at most 25 wt.%, or at most 20 wt%.

The glasses may also comprise alkaline earth metal oxides as well as ZnO which are collectively termed "*RO*" in the present specification. Alkaline earth metals and Zn may serve as network modifiers. Preferably, the glasses comprise RO in an amount of from 0 to 20 wt.%, preferably from 0 to 15 wt.%. In some embodiments, the glass preferably comprises at least 0.5 wt.%, more preferably at least 1 wt.%, more preferably at least 2 wt.% of RO. Preferred alkaline earth metal oxides are selected from the group consisting of MgO, CaO, SrO und BaO. More preferably, alkaline earth metals are selected from the group consisting of BaO und CaO. More preferably, the alkaline earth metal is MgO. Preferably, the glass comprises MgO in an amount of from 0 to 10 wt.%. Preferably, the glass may be free of MgO. Preferably, the glass comprises CaO in an amount of from 0 to 16 wt.%, preferably from 0 to 13 wt.%, preferably from 0 to 10 wt.%. In some embodiments, the glass comprises at least 0.5 wt.%, at least 1 wt.%. Preferably, the glass comprises BaO in an amount of from 0 to 12 wt.%, preferably from 0 to 10 wt.%. In some embodiments, the glass comprises at least 0.5 wt.%, at least 1 wt.% BaO.

Preferably, the glass comprises ZnO in an amount of from 0 to 5 wt.%. In some embodiments, the glass comprises at least 0.5 wt.%, at least 1 wt.%, or at least 2 wt.% of ZnO. In other embodiments, the glass is free of ZnO. Preferably, the content of the sum of MgO and ZnO in the glasses is from 0 to 10 wt.%. In other embodiments, the glass is free of ZnO and MgO

At the end, when forming a glass by mixing different types of the oxides, the integrated effect should be considered to achieve a glass with comparatively low expansion, which is supported by high densification of the glass network. It means, in addition to [SiO₄] tetrahedral [BO₄] tetrahedra, [AlO₄] tetrahedra, or [PO₄] tetrahedra are expected to help connect the [SiO₄] more effectively rather than other type of polyhedrons. In other words, [BO₃] triangle and [AlO₆] octahedron, for instance, are not preferred. It means, sufficient oxygen anions are preferable to be offered by adding proper amounts of metal oxides, such as R₂O and RO.

Preferably, the content of SnO₂ in the glasses is from 0 to 3 wt.%. More preferably, the glasses are free of SnO₂. Preferably, the content of Sb₂O₃ in the glasses is from 0 to 3 wt.%. More preferably, the glasses are free of Sb₂O₃. Preferably, the content of CeO₂ in the glasses is from 0 to 3 wt.%. High contents of CeO₂ are disadvantages because CeO₂ has a coloring effect and, therefore, a disadvantageous effect on the Fe₂O₃ TiO₂ coloring system. Therefore, more preferably, the glasses are free of CeO₂.

The glass described herein is described as having a composition of different constituents. This means that the glass contains these constituents without excluding further constituents that are not mentioned. However, in preferred embodiments, the glass consists of the components mentioned in the present specification to an extent of at least 95 wt.%, more preferably at least 97 wt.%, most preferably at least 99 wt.%. In most preferred embodiments, the glass essentially consists of the components mentioned in the present specification.

The glass composition may include one or more fining agents. The fining agent may be selected from multivalent metal oxides, halides, sulfates and combinations thereof. In an embodiment, the fining agent is selected from the list of arsenic oxide, antimony oxide, tin oxide, cerium oxide, chlorides, fluoride, sulfates and combinations thereof. The total amount of refining agents may be from 0 to 5 wt.%, preferably from 0 to 2 wt.%. In another embodiment the glass composition comprises a fining agent selected from the list of arsenic oxide, antimony oxide, tin oxide or cerium oxide. The total amount of these refining agents may be from 0.03 - 1.5 % wt.%. According to a preferred embodiment of the present invention the amount of each of As₂O₃ and/or, Sb₂O₃ and/or, SnO₂ and/or Ce₂O₃ in the glass composition is less than 1000 ppm, preferably less than 500 ppm and most preferably less than 200 ppm. According to another preferred embodiment of the present invention, the glass composition is free of As₂O₃ and/or, Sb₂O₃ and/or, SnO₂ and/or Ce₂O₃.

In one embodiment the glass composition comprises a fining agent selected from the list of chlorides, sulfates and combinations thereof. The total amount of refining agents may be from 0.03 to 1.5 wt.%. According to a preferred embodiment of the present invention, the glass composition of the present invention is a halogenide refined glass composition and preferably, a chloride or fluoride refined glass composition and most preferably a chloride refined glass composition. Such refining agents improve the electrical conductivity and reduce the specific resistance in the glass melt.

According to one embodiment the glass composition might be free of heavy metals.

In embodiments, the glass used for the glass tube element has the following composition in percent by weight:

| **Component** | **Content (wt.%)** |
|---|---|
| SiO₂ | 65 to 85 |
| Al₂O₃ | 4 to 10 |
| Na₂O | 0.5 to 10 |
| K₂O | 0.5 to 10 |
| MgO | 0 to 3 |
| B₂O₃ | 5 to 15 |
| Li₂O | 0 to 3 |
| ZnO | 0 to 3 |
| CaO | 0 to 3 |
| BaO | 0 to 3 |
| ZrO₂ | 0 to 3 |
| CeO₂ | 0 to 0.5 |
| SnO₂ | 0 to 3 |
| P₂O₅ | 0 to 3 |
| Fe₂O₃ | 0.5 to 3.0 |
| TiO₂ | 1 to 6 |
| SrO | 0 to 1 |
| F | 0 to 1 |
| Cl | 0 to 1 |

Preferably, the amber glass tube has a glass composition comprising 60 to 85 wt.-% SiO₂, 5 to 20 wt.-% B₂O₃, 1 to 10 wt.-% Al₂O₃, 0.25 to 2 wt.-% Fe₂O₃, 0.5 to 10 wt.-% TiO₂, 2 to 10 wt.-% Na₂O, 0 to 5 wt.-% K₂O, 0 to 2 wt.-% BaO, 0 to 2 wt.-% CaO, based on all oxides present in the glass composition.

According to another preferred embodiment of the present invention, the amber glass tube has a glass composition comprising or consisting of 65 to 75 wt.-% SiO₂, 5 to 10 wt.-% B₂O₃, 2 to 8 wt.-% Al₂O₃, 2 to 10 wt.-% Na₂O, 0.5 to 5 wt.-% K₂O, 0 to 1 wt.% MgO, 0 to 2 wt.-% CaO, 0 to 1 wt.-% SrO, 0 to 3 wt.-% BaO, 0.25 to 2 wt.-% Fe₂O₃, 0.5 to 10 wt.-% TiO₂, based on all oxides present in the glass composition. According to another preferred embodiment of the present invention, the amber glass tube has a glass composition comprising or consisting of 65 to 75 wt.-% SiO₂, 5 to 10 wt.-% B₂O₃, 2 to 8 wt.-% Al₂O₃, 2 to 10 wt.-% Na₂O, 0.5 to 5 wt.-% K₂O, 0 to 1 wt.% MgO, 0 to 2 wt.-% CaO, 0 to 1 wt.-% SrO, 0 to 3 wt.-% BaO, 0.25 to 2 wt.-% Fe₂O₃, 0.5 to 10 wt.-% TiO₂, based on all oxides present in the glass composition, wherein the Fe₂O₃ and TiO₂ in the glass composition is in a ratio of between 1:3.00 to 1:5.00, preferably in a ratio of 1:3.50 to 1:4.50 and most preferably in a ratio of between 1:3.80 to 1:4.00 based on the weight of the oxides. According to another preferred embodiment of the present invention, the amber glass tube has a glass composition comprising or consisting of 65 to 75 wt.-% SiO₂, 5 to 10 wt.-% B₂O₃, 2 to 8 wt.-% Al₂O₃, 2 to 10 wt.-% Na₂O, 0.5 to 5 wt.-% K₂O, 001 to 0.05 wt.% MgO, 0.1 to 1 wt.-% CaO, 0.01 to 0.5 wt.-% SrO, 1 to 3 wt.-% BaO, 0.01 to 0.5 wt.% MnO, 1.0 to 1.5 wt.-% Fe₂O₃, 2 to 8 wt.-% TiO₂, based on all oxides present in the glass composition, wherein the Fe₂O₃ and TiO₂ in the glass composition is in a ratio of between 1:3.00 to 1:5.00, preferably in a ratio of 1:3.50 to 1:4.50 and most preferably in a ratio of between 1:3.80 to 1:4.00 based on the weight of the oxides. According to another preferred embodiment of the present invention, the amber glass tube has a glass composition comprising or consisting of 65 to 75 wt.-% SiO₂, 5 to 10 wt.-% B₂O₃, 2 to 8 wt.-% Al₂O₃, 2 to 10 wt.-% Na₂O, 0.5 to 5 wt.-% K₂O, 001 to 0.05 wt.% MgO, 0.1 to 1 wt.-% CaO, 0.01 to 0.5 wt.-% SrO, 1 to 3 wt.-% BaO, 0.01 to 0.5 wt.% MnO, 1.0 to 1.5 wt.-% Fe₂O₃, 2 to 8 wt.-% TiO₂, based on all oxides present in the glass composition, wherein the Fe₂O₃ and TiO₂ in the glass composition is in a ratio of between 1:3.00 to 1:5.00, preferably in a ratio of 1:3.50 to 1:4.50 and most preferably in a ratio of between 1:3.80 to 1:4.00 based on the weight of the oxides, wherein the glass composition does not comprise Li₂O.

### Method step b)

According to method step b) the amber glass tube provided in step a) is hot formed into an amber glass container.

Hot forming in the meaning of the present invention is a process wherein the amber glass tube is converted/reshaped into the defined shape of the amber glass container by the use of hot forming tools. More precisely, the amber glass tube is reshaped at one or more forming stations with different hot forming tools such as forming rollers and forming mandrels into an amber glass container that can be further processed into a pharmaceutical primary packaging mean, namely the amber pharmaceutical glass container. For example, the amber glass tube can be reshaped by heating of the glass tube to the forming temperature by using gas burners at upstream heating stations. The hot glass tube can be fed to the forming stations via rotating chucks, with the longitudinal axis of the glass tube corresponding to the axis of rotation. Within a forming system, the glass is shaped by means of forming rollers and a forming mandrel, with the forming roller located on the outside of the resulting container and the forming mandrel on the inside. For reshaping, the forming rollers perform a radial movement relative to the axis of rotation or longitudinal axis of the container or pipe section. The mandrel serves to guarantee the inner shape of the product. The rollers and the mandrel are lubricated between the forming strokes, firstly to reduce friction between the glass and the forming tools and thereby prevent surface defects. Oil might be used in such a process or air coolers, which might have a cooling effect on the forming tools and might prevent the glass from adhering to the tools.

The method of hot forming the amber glass tube into an amber glass container as well as the necessary tools are known to the skilled person. For example, methods and tools therefore are described in EP3652120B1, DE102020114886A1, EP3677554B1. The skilled person will choose and adapt the method dependent on the available equipment and the amber glass container that should be formed.

According to one embodiment of the present invention, the amber glass tube provided in step a) is hot formed into an amber glass container that is in the form of a vial or in the form of a syringe or in the form of a cartridge.

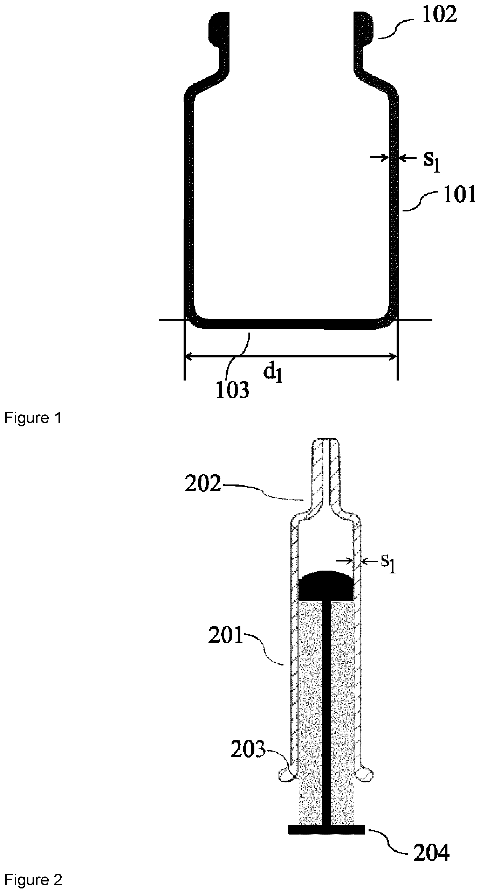

According to one embodiment of the present invention, the amber glass tube provided in step a) is hot formed into an amber glass container that is in the form of a vial. A vial in the meaning of the present invention is a closable container that might be closed or sealed, for example, by crimping. According to a preferred embodiment of the present invention, the hot formed vial is a 2R, 4R, 6R, 10R, 15R or 20R vial according to ISO 8362-1:2018. According to another preferred embodiment of the present invention, the hot formed vial is a 2R, 4R, 6R, 10R, 15R or 20R vial having all the dimensions as mentioned in ISO 8362-1:2018, with the exception that the wall thickness s₁ of the of the vial is 1.0 mm. The wall thickness s₁ of a vial can be seen in more detail in Figure 1.

According to another embodiment of the present invention, the amber glass tube provided in step a) is hot formed into an amber glass container that is in the form of a syringe. A syringe in the meaning of the present invention is a tube with a nozzle and together with a piston or bulb can be used for sucking in and ejecting liquids and might fitted with a hollow needle for injecting or withdrawing fluids. According to a preferred embodiment of the present invention, the hot formed syringe is a 0.5 ml, 1.1 ml, 1.5 ml, 2 ml, 2.25 ml, 3 ml, 5 ml, 10 ml or 20 ml syringe according to ISO 11040-4:2024. According to another preferred embodiment of the present invention, the hot formed syringe is a 0.5 ml, 1.1 ml, 1.5 ml, 2 ml, 2.25 ml, 3 ml, 5 ml, 10 ml or 20 ml syringe having all the dimensions as mentioned in ISO 11040-4:2024, with the exception that the wall thickness s₁ of the of the syringe is 1.0 mm. The wall thickness s₁ of a syringe can be seen in more detail in Figure 2.

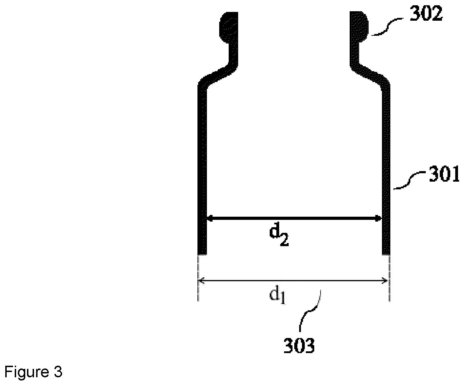

According to one embodiment of the present invention, the amber glass tube provided in step a) is hot formed into an amber glass container that is in the form of a cartridge. A cartridge in the meaning of the present invention is a closable container that might be closed or sealed, for example, by crimping. According to a preferred embodiment of the present invention, the hot formed cartridge is a 1.5ml, or 3ml, cartridge according to ISO 13926-1:2020-02. According to another preferred embodiment of the present invention, the hot formed cartridge is a 1.5ml or 3ml, cartridge having all the dimensions as mentioned in ISO 13926-1:2020-02, with the exception that the wall thickness (d₁-d₂)/2 of the of the cartridge is 1.0 mm. The wall thickness that is calculated from the values d₁ and d₂ of a cartridge can be seen in more detail in Figure 3. According to another preferred embodiment, the hot formed cartridge is a 5ml, or 7.3ml, or 10 ml or 20 ml cartridge that has the same dimensions as defined in ISO 13926-1:2020-02 with the exception of the length and the diameter of the cartridge. According to another preferred embodiment of the present invention, the hot formed cartridge is a 5ml or 7.3ml or 10 ml, or 20 ml cartridge that has the same dimensions as defined in ISO 13926-1:2020-02, with the exception of the length and the diameter of the cartridge and that the wall thickness (d₁-d₂)/2 of the of the cartridge is 1.0 mm.

The skilled person knows how to measure the wall thickness of the amber glass container and selects suitable measuring equipment depending on the type and size of the object to be measured and on the accuracy with which the object and thus also the tolerance are to be determined. Such measuring equipment is commercially available, e.g. micrometers, calipers or two-point probe heads, or optical measuring instruments, e.g. digital measuring projectors. Digital measuring projectors are available from companies such as Keyence.

During hot forming step b) at least a part of the amber glass tube is heated up to a temperature around the shaping temperature of the used glass and afterwards is molded/reshaped in contact with the molding tool. According to a preferred embodiment of the present invention only the parts of the amber glass tube that are reshaped/molded are heated such as the bottom and the shoulder and the rolled rim of the vial or the nozzle and the finger grip of the syringe. The remaining part of the amber glass tube that forms the body or the barrel part of the container is not heated actively, at least not to or above the Tg of the amber glass tube.

According to one embodiment of the present invention, a method for producing an amber pharmaceutical glass container is provided, wherein during hot forming step b) the amber glass tube is formed into an amber glass container
i) wherein the body and/or the barrel of the amber glass container is held below Tg during hot forming step b) and/or
ii) wherein the part of the amber glass tube that is reshaped is heated above Tg for 1 sec to 500 sec, preferably for 2 sec to 200 sec and most preferably for 3 sec to 100 sec.

According to one embodiment of the present invention, a method for producing an amber pharmaceutical glass container is provided, wherein during hot forming step b) the amber glass tube is formed into an amber glass container wherein the body and/or the barrel of the amber glass container is held below Tg during hot forming step b) preferably at least 90 % of the body and/or the barrel of the amber glass container body is held below Tg, more preferably at least 80 % and most preferably at least 70 %.

### Method step c)

According to method step c) the amber glass container is heated at a temperature of between Tg +5 °C to Tg +50 °C.

The Tg in the meaning of the present invention is also known as the transformation temperature of the glass and is defined in ISO 7884-8:1987. The temperature corresponding to the point of intersection of two tangents, drawn from the low-temperature branch and the high-temperature branch of the dilatometer curve. It corresponds to a dynamic viscosity of the order of 10^{13,3} dPa·s. The skilled person knows the Tg value and how to measure it as given in the above-mentioned ISO-Norm.

According to a preferred embodiment of the present invention, the heating step c) is performed at a temperature of between Tg +8 °C to Tg +45 °C, preferably at a temperature of between Tg +10 °C to Tg +35 °C, and most preferably at a temperature of between Tg +12 °C to Tg + 30 °C. According to an exemplified embodiment the heating step c) is performed at a temperature of Tg +15 °C ±1 °C.

The heating step c) might be performed by any heating device that is suitable to heat the amber glass container to the required temperature, for example an oven, annealing lehrs, heating chamber, heat blower or heat plates. Such heating devices are known to the skilled person and commercially available and the skilled person will choose a suitable heat device dependent on the required temperature and the further process equipment and the amount of amber glass container bodies that should be heated. According to a preferred embodiment the heating device is an oven through which the amber glass containers are transported by means of a conveyor belt.

It is important to note that the temperatures given are the temperatures of the amber glass container and not the temperatures of the heating source. The temperatures of the heating source can be higher. The skilled person knows how to adjust the temperatures at the heating source, for example at the oven, in order to achieve the required temperatures in the amber glass container.

The temperature does not have to remain constant the whole-time during step c). For example, the amber glass container can be in the lower temperature range as specified above at the beginning and then in the upper temperature range as specified above at the end of heating step c). According to a preferred embodiment of the present invention, the temperature remains constant during step c).

According to another preferred embodiment of the present invention the heating step c) is performed between 1 and 600 sec., preferably between 5 to 500 sec., more preferably between 10 to 300 sec, and even more preferably between 12 to 100 sec. According to an exemplified embodiment the heating step c) is performed for 15 sec ±1 sec.

According to another embodiment of the present invention the heating step c) is performed at a temperature of between Tg +5 °C to Tg +50 °C, preferably between Tg +8 °C to Tg +45 °C, more preferably at a temperature of between Tg +10 °C to Tg +35 °C, and most preferably at a temperature of between Tg +12 °C to Tg + 30 °C and for a time between 1 and 600 sec., preferably between 5 to 500 sec., more preferably between 10 to 300 sec, and even more preferably between 12 to 100 sec.

According to an exemplified embodiment of the present invention, the heating step c) is performed at a temperature of Tg +15 °C ±1 °C and for a time of 15 sec ±1 sec.

The heating step c) can be performed under air or under a protective atmosphere such as nitrogen atmosphere. According to a preferred embodiment of the present invention, the heating step c) is done under air.

The heating step c) can be done under normal pressure or under reduced pressure. According to a preferred embodiment of the present invention the heating step c) is done under normal pressure.

According to method step c) the amber glass container is directly heated at a temperature of between Tg +5 °C to Tg +50 °C without any upheating. According to another embodiment of the present invention, the amber glass container is upheated to the temperature of between Tg +5 °C to Tg +50 °C for a defined time via a temperature ramp. The temperature can rise constantly in this temperature ramp, or in a staircase profile or exponentially. However, a constant increase is preferred. According to a preferred embodiment of the present invention the upheating is performed between 1 sec and 20 min, preferably between 3 min and 18 min, even more preferably between 5 to 15 min and even more preferably between 8 to 12 min. According to an exemplified embodiment the upheating is performed for 10 min ±1 min.

The upheating can be done at a speed of between 0.8 °C/s to 10 °C/s per 1.0 mm wall thickness of the amber glass container, preferably between 1.0 °C/sec to 8 °C/sec, and most preferably at a speed of between 1.5 °C/sec to 5 °C/sec, per 1.0 mm wall thickness of the amber glass container.

The upheating can be performed under air or under a protective atmosphere such as nitrogen atmosphere. According to a preferred embodiment of the present invention, the uphating is done under air.

The upheating can be done under normal pressure or under reduced pressure. According to a preferred embodiment of the present invention the upheating is done under normal pressure.

### Method step d)

In method step d) the heated amber glass container of step c) is cooled to a temperature of between Tg -60 °C to Tg -10 °C at a speed of between 0.8 °C/s to 4 °C/s per 1.0 mm wall thickness of the amber glass container.

According to a preferred embodiment of the present invention, the heated amber glass container of step c) is cooled during step d) to a temperature of between Tg -50 °C to Tg -15 °C, preferably to a temperature of between Tg -40 °C to Tg -20 °C. According to an exemplified embodiment of the present invention the heated amber glass container of step c) is cooled during step d) to a temperature of Tg -30 °C ±1 °C.

According to another preferred embodiment of the present invention, the heated amber glass container of step c) is cooled during step d) a speed of between 0.9 °C/sec to 3 °C/sec, preferably at a speed of between 1.0 °C/sec to 2.5 °C/sec and most preferably at a speed of between 1.0 °C/sec to 2.0 °C/sec, per 1.0 mm wall thickness of the amber glass container.

According to a preferred embodiment of the present invention, the heated amber glass container of step c) is cooled during step d) to a temperature of between Tg -60 °C to Tg -10 °C, preferably to a temperature of between Tg -50 °C to Tg -15 °C, and most preferably to a temperature of between Tg -40 °C to Tg -20 °C at a speed of between 0.8 °C/s to 4 °C/s per 1.0 mm wall thickness of the amber glass container , preferably at a speed of between 0.9 °C/sec to 3 °C/sec, preferably at a speed of between 1.0 °C/sec to 2.5 °C/sec and most preferably at a speed of between 1.0 °C/sec to 2.0 °C/sec.

The cooling step d) might be performed by any cooling device that is suitable to cool the amber glass container to the required temperature, for example a cooling fan, cooling chamber, freezing chamber or Peltier element. Alternatively, the amber glass container can be cooled by not actively heating the amber glass container. In such a case the amber glass container will cool down to room temperature. Such cooling devices and options are known to the skilled person and commercially available and the skilled person will choose a suitable cooling device dependent on the required temperature and the further process equipment and the amount of amber glass containers that should be cooled. According to a preferred embodiment the amber glass containers obtained in step c) are transported by means of a conveyor belt out of the oven. Depending on the temperature outside the oven and the movement of the conveyor belt, the desired temperature and cooling rate can be obtained.

It is important to note that the temperatures given are the temperatures of the amber glass container and not the temperatures of the cooling device. The temperatures of the cooling device can be lower. The skilled person knows how to adjust the temperatures at the cooling device, in order to achieve the required temperatures and cooling rates in the amber glass container.

The cooling does not have to remain constant the whole-time during step d). For example, the amber glass container can be cooled at higher cooling rates as specified above at the beginning and then at lower cooling rates as specified above at the end of cooling step d).

According to another preferred embodiment of the present invention the cooling step d) is performed between 1 and 600 sec., preferably between 5 to 500 sec., more preferably between 10 to 300 sec, and even more preferably between 12 to 100 sec. According to an exemplified embodiment the cooling step d) is performed for 15 sec ±1 sec.

The cooling step d) can be performed under air or under a protective atmosphere such as nitrogen atmosphere. According to a preferred embodiment of the present invention, the cooling step d) is done under air.

The cooling step d) can be done under normal pressure or under reduced pressure. According to a preferred embodiment of the present invention the cooling step d) is done under normal pressure.

After step d) an amber pharmaceutical glass container according to the present invention is obtained.

The inventors surprisingly found that by the inventive method it is possible to prepare amber pharmaceutical glass containers that meet the requirements for UV blocking as well as transmission in the visible range according to the most important standards, namely USP<660> and E.P.3.2.1 as well as JP requirements JP 7.01. More precisely, by the inventive method it is possible to provide amber pharmaceutical glass containers that have a transmission throughout a wavelength range of from 290 nm to 450 nm of 25 % or less, measured at a thickness of 1.0 mm in order to provide UV blocking and have a transmission throughout a wavelength range from 590 nm to 610 nm of 45 % or more measured at a thickness of 1.0 mm in order to be suitable for visual inspection.

In this context the inventors surprisingly found that by the inventive method known amber glass tubes with a known coloring system, namely a Fe₂O₃ and TiO₂ coloring system can be used.

Coloring systems based on Fe₂O₃ and TiO₂ in the glass composition are known to the skilled person and have been used over decades to provide an amber coloring in the glass. However, one advantage of these coloring systems is that they are approved in the pharmaceutical sector. The inventors surprisingly found that the above coloring system is advantageous in the present method for preparing the amber pharmaceutical glass container according to the present invention. More precisely, the inventors surprisingly found that a combination of Fe₂O₃ and TiO₂ can be used in a borosilicate glass as temperature dependent coloring system. More precisely, the inventors found that when using the Fe₂O₃ and TiO₂ preferably in the ratio as set out above, it is possible to control the UV transmission as well as the transmission in the visible range. Especially, the inventors surprisingly found out that by a targeted temperature control during post-processing as set out above, customized properties can be achieved in the obtained amber pharmaceutical glass containers. Especially, it is possible by the inventive method, namely by heating the amber glass container at a temperature of between Tg +5 °C to Tg +50 °C, and cooling the heated amber glass container of step c) to a temperature of between Tg -60 °C to Tg -10 °C at a speed of between 0.8 °C/s to 4 °C/s per 1.0 mm wall thickness of the amber glass container to provide an amber pharmaceutical glass container that has a transmission throughout a wavelength range of from 290 nm to 450 nm of 25 % or less, measured at a thickness of 1.0 mm in order to provide UV blocking and have a transmission throughout a wavelength range from 590 nm to 610 nm of 45 % or more measured at a thickness of 1.0 mm in order to be suitable for visual inspection. The production of such an amber pharmaceutical glass container has not been possible until now because, according to general knowledge, the two transmission values (in the UV range and the visible range) run contrary to each other. More precisely, the darker the glass color and, therefore, the legal requirements in the UV range are met, the lower the transmission in the visible range. Conversely, the lighter the glass color and, therefore, the legal requirements in the visible range are met, the higher the transmission in the UV range.

Furthermore, the inventors found that by the above heating step c) and cooling step d) it is still possible to obtain amber pharmaceutical glass containers with good chemical and physical stability, and especially with good physical stability. The physical stability is also dependent, amongst other parameters, on the heat treatment after the hot forming. Therefore, such treatment steps, especially heating at a defined temperature and subsequent cooling, is normally not changed to provide stable processes. More precisely, it is advantageous to heat amber glass container bodies to high temperatures especially to temperatures highly above the Tg since it is generally known that the physical stability of amber pharmaceutical glass containers increases with higher heating temperatures and decreases with lower heating temperatures. Normally the skilled person would not choose heating temperatures of below Tg +50 °C since it is common general knowledge that below such temperatures the physical stability of the obtained amber pharmaceutical glass containers decreases, especially the ring tension which can be measured by the de Senarmont and Friedel Method and can be measured in Friedelgrad.

The inventors surprisingly found that by the inventive method it is possible to produce amber pharmaceutical glass containers that meet the ISO standard in terms of the required sizes and fulfil the required transmission values in the range of from 290 nm to 450 nm and from 590 nm to 610 nm. In addition to that the produced amber pharmaceutical containers are physically stable and have a ring tension of 1 Friedelgrad or less. The inventors surprisingly found that by the inventive method the inventive amber pharmaceutical glass containers can be produced in a large scale. Furthermore, the inventors found that the above method is easy to handle, economic, since existing apparatuses can be used to a large extent and only require a small amount of conversion. Furthermore, the time for preparing the inventive pharmaceutical glass containers is not actually affected. In addition to that known amber glass tubes can be used that are already commercially available as well as known and already available equipment since no specialized machines or equipment has to be provided.

### Further optional process steps

The inventive process may comprise further additional process steps.

According to one embodiment of the present invention the amber pharmaceutical glass container obtained after step d) can be further cooled to room temperature in step e).

For example, the cooling step e) is performed between 1 sec and 24 h, preferably between 1 min to 1 h, more preferably between 5 min to30 min. According to an exemplified embodiment the cooling step e) is performed for 15 min ±2 min.

According to another preferred embodiment of the present invention, the amber pharmaceutical glass container obtained after step d) is cooled during step e) a speed of between 0.8 °C/sec to 20 °C/sec, and most preferably at a speed of between 2.0 °C/sec to 10 °C/sec, per 1.0 mm wall thickness of the amber glass container.

The cooling step e) might be performed by any cooling device that is suitable to cool the amber glass container to the required temperature. Suitable cooling devices have already been set out under step d).

The cooling step e) can be performed under air or under a protective atmosphere such as nitrogen atmosphere. According to a preferred embodiment of the present invention, the cooling step e) is done under air. The cooling step e) can be done under normal pressure or under reduced pressure. According to a preferred embodiment of the present invention the cooling step e) is done under normal pressure.

According to one embodiment of the present invention the amber pharmaceutical glass container obtained after step d) or e) can be further washed and optionally dried in step f). The skilled person knows such processes and will choose suitable parameters and devices for the optional washing and/or drying step f).

According to another embodiment of the present invention the amber pharmaceutical glass container obtained after step d) or e) or f) can be further sterilized in step g). The skilled person knows such sterilization processes and will choose suitable parameters and devices for the optional sterilization step g). For example, the sterilization is a steam sterilization or an ethylene oxide sterilization.

According to another embodiment of the present invention the amber pharmaceutical glass container obtained after step d) or e) or f) or g) can be further coated in step h). The skilled person knows such coating processes and will choose suitable parameters and devices as well as suitable coatings for the optional coating step h).

For example, the coating composition may be applied by conventional coating means commonly used in this art. Suitable coating methods are, e.g., air knife coating, electrostatic coating, metering size press, film coating, spray coating, wound wire rod coating, slot coating, slide hopper coating, gravure, curtain coating, high speed coating, coating via PICVD (plasma impulse chemical vapor deposition) and the like. Some of these methods allow for simultaneous coatings of two or more layers. However, any other coating method which would be suitable to form a coating layer may also be used. Afterwards, the coating layer may be dried. The drying can be carried out by any method known in the art, and the skilled person will adapt the drying conditions such as the temperature according to his process equipment. For example, the coating layer can be dried by infrared drying and/or convection drying. The drying step may be carried out at room temperature or at other temperatures. According to one embodiment the coating is carried out at a surface temperature of the amber pharmaceutical glass container of from 25 to 150° C.

According to a preferred embodiment of the present invention, the coating is applied via PICVD (plasma impulse chemical vapor deposition). Such an application is advantageous since it forms covalent bonds, which may avoid for example free silicone in the amber pharmaceutical glass container. Such plasma coating methods are known, for example from US8592015 B2. According to a preferred embodiment of the present invention, step h) is performed by depositing a coating on the interior surface of the amber pharmaceutical glass container by plasma-assisted chemical vapor deposition in which, for deposition, a process gas having a silicon-containing gas component, as well as carbon and oxygen as further gas components, is admitted into a reaction chamber, which is bounded at least in part by the substrate, and igniting a plasma in the reaction chamber by pulsed irradiation of electromagnetic energy, resulting in the formation of reaction products in the plasma, which are deposited as a layer on the substrate, wherein the pulsed irradiation of electromagnetic energy comprises a pulsed plasma having preferably a pulse duration in the range of 0.1 ps to 100 ps.

### Amber pharmaceutical glass container

According to the present invention an amber pharmaceutical glass container is provided wherein the amber glass has a transmission throughout a wavelength range of from 290 nm to 450 nm of 25 % or less, measured at a thickness of 1.0 mm and has a transmission throughout a wavelength range from 590 nm to 610 nm of 45 % or more measured at a thickness of 1.0 mm.

According to a preferred embodiment of the present invention, the amber pharmaceutical glass container is a vial or a syringe or a cartridge.

As already set out above under method step b), the vial is a 2R, 4R, 6R, 10R, 15R or 20R vial according to ISO 8362-1:2018. According to a preferred embodiment of the present invention, the vial is a 2R, 4R, 6R, 10R, 15R or 20R vial having all the dimensions as mentioned in ISO 8362-1:2018, with the exception that the wall thickness s₁ of the of the vial is 1.0 mm. Alternatively, the vial is a 10R or 20R vial having all the dimensions as mentioned in ISO 8362-1:2018, with the exception that the wall thickness s₁ of the of the vial is 1.0 mm and the nominal volume is 10 ml or 20 ml. According to a preferred embodiment of the present invention, the amber pharmaceutical glass container is a 2R, 4R, 6R, 10R or 15R vial according to ISO 8362-1:2018. According to a most preferred embodiment of the present invention, the amber pharmaceutical glass container is a 2R or 4R vial according to ISO 8362-1:2018.

As already set out above under method step b), the syringe is a 0.5 ml, 1.1 ml, 1.5 ml, 2 ml, 2.25 ml, 3 ml, 5 ml, 10 ml or 20 ml syringe according to ISO 11040-4:2024. According to a preferred embodiment of the present invention, the syringe is a 0.5 ml, 1.1 ml, 1.5 ml, 2 ml, 2.25 ml, 3 ml, 5 ml, 10 ml or 20 ml syringe having all the dimensions as mentioned in ISO 11040-4:2024, with the exception that the wall thickness s₁ of the of the syringe is 1.0 mm. According to a preferred embodiment of the present invention, the syringe is a 0.5 ml, 1.1 ml, 1.5 ml, 2 ml, 2.25 ml, or 3 ml, syringe according to ISO 11040-4:2024, with the exception that the wall thickness s₁ of the of the syringe is 1.0 mm. According to a preferred embodiment of the present invention, the syringe is a 1.1 ml, 1.5 ml, or 2 ml, syringe according to ISO 11040-4:2024, with the exception that the wall thickness s₁ of the of the syringe is 1.0 mm.

As already set out above under method step b), the cartridge is a 1.5ml, or 3ml cartridge according to ISO 13926-1:2020-02. According to another preferred embodiment of the present invention, the cartridge is a 1.5ml or 3ml cartridge having all the dimensions as mentioned in ISO 13926-1:2020-02, with the exception that the wall thickness (d₁-d₂)/2 of the of the cartridge is 1.0 mm. According to another preferred embodiment, the cartridge is a 5ml, or 7.3ml, or 10 ml or 20 ml cartridge that has the same dimensions as defined in ISO 13926-1:2020-02 with the exception of the length and the diameter of the cartridge. According to another preferred embodiment of the present invention, the cartridge is a 5ml or 7.3ml or 10 ml, or 20 ml cartridge that has the same dimensions as defined in ISO 13926-1:2020-02, with the exception of the length and the diameter of the cartridge and that the wall thickness (d₁-d₂)/2 of the of the cartridge is 1.0 mm.

According to the present invention an amber pharmaceutical glass container is provided wherein the amber glass has a transmission throughout a wavelength range of from 290 nm to 450 nm of 25 % or less, measured at a thickness of 1.0 mm, preferably 20 % or less, more preferably of 15 % or less, even more of 13 % or less, even more of 12 % or less and most preferably of 10 % or less. Additionally, or alternatively, the amber glass has a transmission throughout a wavelength range of from 290 nm to 450 nm of at least 5 %, preferably of at least 8 %, preferably of at least 10 %, preferably of at least 12 %, preferably of at least 15 %, preferably of at least 20 %. For example, the amber glass has a transmission throughout a wavelength range of from 290 nm to 450 nm of between 5 % to 10 %, or of between 8 % to 12 %, or of between 10 % to 13%, or of between 12 % to 15 %, or of between 15 % to 20 % or of between 20 % to 25 %.

According to the present invention an amber pharmaceutical glass container is provided wherein the amber glass has a transmission throughout a wavelength range of from 590 nm to 610 nm of 45 % or more measured at a thickness of 1.0 mm, preferably of 50 % or more and most preferably of 52.5 % or more measured at a thickness of 1 mm. Additionally, or alternatively, the amber glass has a transmission throughout a wavelength range of from 590 nm to 610 nm of less than 65 %, preferably of less than 60 % and most preferably of less than 55 %, measured at a thickness of 1 mm. For example, the amber glass has a transmission throughout a wavelength range of from 590 nm to 610 nm of between 45 % to 65.0%, or from 50.0% to 60.0% or from 52.5 % to 55.0 %, measured at a thickness of 1.0 mm.

According to a preferred embodiment of the present invention, the inventive amber pharmaceutical glass container is a 2R or 4R vial according to ISO 8362-1:2018, having a transmission throughout a wavelength range of from 290 nm to 450 nm of 15% or less, measured at a thickness of 1.0 mm and a transmission throughout a wavelength range from 590 nm to 610 nm of 45 % or more measured at a thickness of 1.0 mm.

According to another preferred embodiment of the present invention, the inventive amber pharmaceutical glass container is a 6R or 8R vial according to ISO 8362-1:2018, having a transmission throughout a wavelength range of from 290 nm to 450 nm of 13% or less, measured at a thickness of 1.0 mm and a transmission throughout a wavelength range from 590 nm to 610 nm of 45 % or more measured at a thickness of 1.0 mm.

According to another preferred embodiment of the present invention, the inventive amber pharmaceutical glass container is a 10R or 15R vial according to ISO 8362-1:2018, having a transmission throughout a wavelength range of from 290 nm to 450 nm of 12% or less, measured at a thickness of 1.0 mm and a transmission throughout a wavelength range from 590 nm to 610 nm of 45 % or more measured at a thickness of 1.0 mm.

According to another preferred embodiment of the present invention, the inventive amber pharmaceutical glass container is a 10R vial according to ISO 8362-1:2018, with the exception that the nominal volume is 10 ml, having a transmission throughout a wavelength range of from 290 nm to 450 nm of 13% or less, measured at a thickness of 1.0 mm and a transmission throughout a wavelength range from 590 nm to 610 nm of 45 % or more measured at a thickness of 1.0 mm.

According to another preferred embodiment of the present invention, the inventive amber pharmaceutical glass container is a 20R vial according to ISO 8362-1:2018, having a transmission throughout a wavelength range of from 290 nm to 450 nm of 10% or less, measured at a thickness of 1.2 mm and a transmission throughout a wavelength range from 590 nm to 610 nm of 45 % or more measured at a thickness of 1.2 mm.

According to another preferred embodiment of the present invention, the inventive amber pharmaceutical glass container is a 20R vial according to ISO 8362-1:2018, with the exception that that the wall thickness s₁ of the of the vial is 1.0 mm and the nominal volume is 20 ml, having a transmission throughout a wavelength range of from 290 nm to 450 nm of 10% or less, measured at a thickness of 1.0 mm and a transmission throughout a wavelength range from 590 nm to 610 nm of 45 % or more measured at a thickness of 1.0 mm.

According to another preferred embodiment of the present invention, the inventive amber pharmaceutical glass container is a 20R vial according to ISO 8362-1:2018, with the exception that the wall thickness s₁ of the of the vial is 1.0 mm, having a transmission throughout a wavelength range of from 290 nm to 450 nm of 10% or less, measured at a thickness of 1.0 mm and a transmission throughout a wavelength range from 590 nm to 610 nm of 45 % or more measured at a thickness of 1.0 mm.

It has to be noted that in the ISO 8362-1:2018 each vial size is related to a brimful volume. More precisely 2R refers to 4 ml brimful volume, 4R refers to 6 ml brimful volume, 6R refers to 10 ml brimful volume, 8R refers to 11.5 ml brimful volume, 10R refers to 13.5 ml brimful volume, 15R refers to 19 ml brimful volume, 20R refers to 26 ml brimful volume. In the United States Pharmacopeia (USP <660>) and European Pharmacopoeia (E.P.3.2.1) as well as in the Japanese Pharmacopeia (JP 7.01) the nominal volume instead of the brimful volume is defined. However, these values can be calculated one into another. 4 ml brimful volume refer to 3.4 ml nominal volume, 6 ml brimful volume refer to 4.8 ml nominal volume, 10 ml brimful volume refer to 8.3 ml nominal volume, 11.5 ml brimful volume refer to 9.8 ml nominal volume, 13.5 ml brimful volume refer to 11.5 ml nominal volume, 19 ml brimful volume refer to 17.3 ml nominal volume, and 26 ml brimful volume refer to 21.7 ml nominal volume.

According to one embodiment of the present invention, the amber pharmaceutical glass container is an amber pharmaceutical borosilicate glass container, an amber pharmaceutical alumino-borosilicate glass container, an amber pharmaceutical alumino-silicate or an amber pharmaceutical lithium alumino-silicate (LAS) glass container. According to a preferred embodiment, the amber pharmaceutical glass container is an amber pharmaceutical borosilicate glass container.

According to a preferred embodiment of the present invention, the amber pharmaceutical glass container according to the present invention has a glass composition as already set out above under method step a). According to a preferred embodiment of the present invention, the amber pharmaceutical glass container has a glass composition comprising 60 to 85 wt.-% SiO₂, 5 to 20 wt.-% B₂O₃, 1 to 10 wt.-% Al₂O₃, 0.25 to 2 wt.-% Fe₂O₃, 0.5 to 10 wt.-% TiO₂, 2 to 10 wt.-% Na₂O, 0 to 5 wt.-% K₂O, 0 to 2 wt.-% BaO, 0 to 2 wt.-% CaO, based on all oxides present in the glass composition.

According to a preferred embodiment of the present invention, the amber pharmaceutical glass container has a glass composition comprising or consisting of 65 to 75 wt.-% SiO₂, 5 to 10 wt.-% B₂O₃, 2 to 8 wt.-% Al₂O₃, 2 to 10 wt.-% Na₂O, 0.5 to 5 wt.-% K₂O, 0 to 1 wt.% MgO, 0 to 2 wt.-% CaO, 0 to 1 wt.-% SrO, 0 to 3 wt.-% BaO, 0.25 to 2 wt.-% Fe₂O₃, 0.5 to 10 wt.-% TiO₂, based on all oxides present in the glass composition.

According to another preferred embodiment of the present invention, the amber pharmaceutical glass container has a glass composition comprising or consisting of 65 to 75 wt.-% SiO₂, 5 to 10 wt.-% B₂O₃, 2 to 8 wt.-% Al₂O₃, 2 to 10 wt.-% Na₂O, 0.5 to 5 wt.-% K₂O, 0 to 1 wt.% MgO, 0 to 2 wt.-% CaO, 0 to 1 wt.-% SrO, 0 to 3 wt.-% BaO, 0.25 to 2 wt.-% Fe₂O₃, 0.5 to 10 wt.-% TiO₂, based on all oxides present in the glass composition, wherein the Fe₂O₃ and TiO₂ in the glass composition is in a ratio of between 1:3.00 to 1:5.00, preferably in a ratio of 1:3.50 to 1:4.50 and most preferably in a ratio of between 1:3.80 to 1:4.00 based on the weight of the oxides.

According to another preferred embodiment of the present invention, the amber pharmaceutical glass container has a glass composition comprising or consisting of 65 to 75 wt.-% SiO₂, 5 to 10 wt.-% B₂O₃, 2 to 8 wt.-% Al₂O₃, 2 to 10 wt.-% Na₂O, 0.5 to 5 wt.-% K₂O, 001 to 0.05 wt.% MgO, 0.1 to 1 wt.-% CaO, 0.01 to 0.5 wt.-% SrO, 1 to 3 wt.-% BaO, 0.01 to 0.5 wt.% MnO, 1.0 to 1.5 wt.-% Fe₂O₃, 2 to 8 wt.-% TiO₂, based on all oxides present in the glass composition, wherein the Fe₂O₃ and TiO₂ in the glass composition is in a ratio of between 1:3.00 to 1:5.00, preferably in a ratio of 1:3.50 to 1:4.50 and most preferably in a ratio of between 1:3.80 to 1:4.00 based on the weight of the oxides.

According to another preferred embodiment of the present invention, the amber pharmaceutical glass container has a glass composition comprising or consisting of 65 to 75 wt.-% SiO₂, 5 to 10 wt.-% B₂O₃, 2 to 8 wt.-% Al₂O₃, 2 to 10 wt.-% Na₂O, 0.5 to 5 wt.-% K₂O, 001 to 0.05 wt.% MgO, 0.1 to 1 wt.-% CaO, 0.01 to 0.5 wt.-% SrO, 1 to 3 wt.-% BaO, 0.01 to 0.5 wt.% MnO, 1.0 to 1.5 wt.-% Fe₂O₃, 2 to 8 wt.-% TiO₂, based on all oxides present in the glass composition, wherein the Fe₂O₃ and TiO₂ in the glass composition is in a ratio of between 1:3.00 to 1:5.00, preferably in a ratio of 1:3.50 to 1:4.50 and most preferably in a ratio of between 1:3.80 to 1:4.00 based on the weight of the oxides, wherein the glass composition does not comprise Li₂O.

According to another preferred embodiment of the present invention, the amber pharmaceutical glass container has an average linear coefficient of thermal expansion measured in the range of 20°C to 300°C (CTE) between 3.0 and 8.0 * 10⁻⁶ K⁻¹, or between 3.5 and 7.0 * 10⁻⁶ K⁻¹, or between 4.0 and 6.0 * 10⁻⁶ K⁻¹and most preferably between 5.2 * 10⁻⁶ K⁻¹ to 5.6 * 10⁻⁶ K⁻¹.

According to another preferred embodiment of the present invention, the amber pharmaceutical glass container has a Tg between 300 and 750 °C, preferably between 400 and 700 °C, even more preferably between 500 and 600 °C and most preferably between 520 and 570 °C. The Tg in the meaning of the present invention is also known as the transformation temperature of the glass and is defined in ISO 7884-8:1987.

According to another embodiment of the present invention, the inventive amber pharmaceutical glass container has a ring tension of less than 5 Friedelgrad, preferably less than 4 Friedelgrad even more preferably less than 3 Friedelgrad, even more preferably less than 2 Friedelgrad and most preferably 1 Friedelgrad or less.

According to another embodiment of the present invention, the inventive amber pharmaceutical glass container has a neck squeeze test load of at least 1100 N, preferably at least 1500 N, even more preferably at least 2000 N, and most preferably at least 3000 N.

According to another embodiment of the present invention, the inventive amber pharmaceutical glass container has a burst pressure from 20 to 80 bar, preferably from 30 to 70 bar and most preferably from 40 to 60 bar.

According to another embodiment of the present invention, the inventive amber pharmaceutical glass container has an axial load pressure from 1500 to 6000 N, preferably from 2000 to 5000 N and most preferably from 2500 to 4000 N.

According to another embodiment of the present invention, the inventive amber pharmaceutical glass container has a good chemical durability. The term "chemical durability," in the meaning of the present invention refers to the ability of the inventive amber pharmaceutical glass container and the glass composition produced thereof to resist degradation upon exposure to specified chemical conditions. Preferably, the chemical durability of the glass compositions described herein was assessed according to one of the established material testing standards, namely ISO 720:1985 entitled "Glass - Hydrolytic resistance of glass grains at 121 °C. - Method of test and classification." or ISO 719:2020-09 "Glass - Hydrolytic resistance of glass grains at 98 °C. Method of test and classification in addition to the above referenced standards". The ISO 719 standard is similar to the ISO 720 standard.

According to one embodiment of the present invention, the amber pharmaceutical glass container has a hydrolytic resistance characterized by an extracted Na₂O equivalent in µg per g glass determined according to ISO 719:2020-09 of not more than 62 µg/g, preferably of not more than 31 µg/g. The ISO 719 standard is a measure of the resistance of the glass to degradation in purified, CO-free water. Details on the measuring are defined in the experimental section.

According to another embodiment of the present invention, the amber pharmaceutical glass container has a hydrolytic resistance characterized by an extracted Na₂O equivalent in µg per g glass determined according to ISO 720:2020 of not more than 527 µg/g, preferably of not more than 62 µg/g. The ISO 720 standard is a measure of the resistance of the glass to degradation in purified, CO-free water. Details on the measuring are defined in the experimental section.

According to another embodiment of the present invention, the amber pharmaceutical container comprises a coating on at least a part of the surface of that container. The coating may be present on the exterior surface, the interior surface or the exterior and the interior surface of that container.

For example, the coating may comprise a silicone, a silane or a mixture thereof, wherein the silicone or the silane can be crosslinked or non-crosslinked. Suitable silanes and silicones for treating the surface of such containers are, for examples, disclosed in US2011/0006028 A1, US4420578 or in WO2014/105350 A3. Additionally, or alternatively, the coating comprises a coupling agent layer positioned on the exterior surface of that container, the coupling agent layer comprising a coupling agent; and a polymer layer positioned over the coupling agent layer, the polymer layer comprising a polymer chemical composition. For example, the coating is a coating as described in US 2013/171456 A1.

According to a preferred embodiment of the present invention, the coating is present on the interior surface of that container. According to another embodiment of the present invention, the coating is a hydrophobic coating, which is present on the interior surface of that container. For example, the coating is a coating as described in US8592015 B2.

According to a preferred embodiment of the present invention, the amber pharmaceutical glass container comprises a hydrophobic coating on at least a part of the interior surface of that container, comprising as significant component a compound comprising the elements Si, C, O, and H along with further elements, the further elements having a content of less than 10 at%, said compound comprising a composition SiOₓ-C_{y}H_{z}, in which x lies in the range of 0.6 to 0.9, y lies in the range of 1.2 to 3.3, and z lies in the range of 0.0 to 6.0. According to a preferred embodiment, the hydrophobic coating comprises as significant component a compound comprising the elements Si, C, O, and H along with further elements, the further elements having a content of less than 5 at%, said compound comprising a composition SiOₓ-C_{y}H_{z}, in which x lies in the range of 0.7 to 0.8, y lies in the range of 1.5 to 2.5, and z lies in the range of 0.0 to 6.0, wherein the coating comprises a cross-linked polymerizate. Such coatings are known to the skilled person, for example under the trade name SCHOTT TopLyo^{®}.

According to another preferred embodiment of the present invention, the amber pharmaceutical glass container comprises a coating on at least a part of the interior surface of that container, comprising as significant component SiO₂.

The inventors surprisingly found that by the inventive method it is possible to prepare amber pharmaceutical glass containers that meet the requirements for UV blocking as well as transmission in the visible range according to the most important standards, namely USP and Ph.Eur. as well as JP requirements. More precisely, by the inventive method it is possible to provide amber pharmaceutical glass containers that have a transmission throughout a wavelength range of from 290 nm to 450 nm of 25 % or less, measured at a thickness of 1.0 mm in order to provide UV blocking and have a transmission throughout a wavelength range from 590 nm to 610 nm of 45 % or more measured at a thickness of 1.0 mm in order to be suitable for visual inspection. In addition to that the produced amber pharmaceutical containers are physically stable and preferably have a ring tension of 1 Friedelgrad or less. Therefore, they are stable enough to be used in the pharmaceutical sector.

This is especially advantageous since the pharmaceutical containers can be used for bottling and storing UV critical substances, for example ADCs, but are still permeable in the visible range such that inspection of the containers before and after filling with such UV critical substances is still possible. Furthermore, since the inventive amber pharmaceutical glass containers fulfil standards defined in the USP<660>, the E.P.3.2.1 as well as the JP 7.01. only one sort of glass container can be used in different countries, for example in the US, Europe and Japan. This can result in massive cost savings, since only one type of glass container and one production method is needed. This makes it possible to produced more economically in large quantities. Furthermore, already bottled pharmaceuticals can be distributed in several countries, if necessary. In particular, overcapacity in one country like the USA or Europe can be used in another country with increased demand, such as Japan (or vice versa).

Furthermore, the inventors surprisingly found that the inventive amber pharmaceutical glass containers show good physical and chemical resistance.

### Use of the amber pharmaceutical glass container

According to one aspect of the present invention the amber pharmaceutical glass container according to the present invention is used for storing a pharmaceutical or cosmetical composition or drug. More precisely, the amber pharmaceutical glass container wherein the amber glass has a transmission throughout a wavelength range of from 290 nm to 450 nm of 25 % or less, measured at a thickness of 1.0 mm and has a transmission throughout a wavelength range from 590 nm to 610 nm of 45 % or more measured at a thickness of 1.0 mm, is used for storing a pharmaceutical or cosmetical composition or drug.

According to another embodiment of the present invention, the amber pharmaceutical glass container obtained by the method according to the present invention is used for storing a pharmaceutical or cosmetical composition or drug. More precisely, the amber pharmaceutical glass container obtained by the method comprising the steps of
a) providing an amber glass tube,
b) hot forming the amber glass tube into an amber glass container,
c) heating the amber glass container at a temperature of between Tg +5 °C to Tg +50 °C,
d) cooling the heated amber glass container of step c) to a temperature of between Tg -60 °C to Tg -10 °C at a speed of between 0.8 °C/s to 4 °C/s per 1.0 mm wall thickness of the amber glass container to obtain an amber pharmaceutical glass container,
is used for storing a pharmaceutical or cosmetical composition or drug.

According to a preferred embodiment of the present invention, the amber pharmaceutical glass container according to the present invention is used for storing a pharmaceutical composition and even more preferably compositions comprising ADC(s). ADC is the abbreviation for antibody-drug-conjugates or anything-drug-conjugates. ADCs are a class of biopharmaceutical drugs designed as a targeted therapy for treating cancer. Unlike chemotherapy, ADCs are intended to target and kill tumor cells while sparing healthy cells. ADCs are complex molecules composed of an antibody linked to a biologically active cytotoxic (anticancer) payload or drug. Mainly ADCs comprise three components namely an antibody, which targets the cancer cell surface and may also elicit a therapeutic response, a payload, which elicits the desired therapeutic response and a linker, which attaches the payload to the antibody and should be stable in circulation only releasing the payload at the desired target. There are several ADCs that have been approved by the FDA and are available on the market.

According to one embodiment of the present invention the amber pharmaceutical glass container according to the present invention is used for storing a pharmaceutical composition comprising Gemtuzumab ozogamicin, Brentuximab vedotin, Trastuzumab emtansine, Inotuzumab ozogamicin, Polatuzumab vedotin, Enfortumab vedotin, Trastuzumab deruxtecan, Sacituzumab govitecan, Belantamab mafodotin, Moxetumomab pasudotox, Loncastuximab tesirine, Tisotumab vedotin, Mirvetuximab soravtansine and/or Datopotamab deruxtecan.

Gemtuzumab ozogamicin known under the trade name Mylotarg^{®} targets CD33 and can be used for treating acute myeloid leukemia (AML). Brentuximab vedotin known under the trade name Adcetris^{®} targets CD30 and can be used for Hodgkin lymphoma and anaplastic large cell lymphoma. Trastuzumab emtansine known under the trade name Kadcyla^{®} targets HER2 and can be used for treating HER2-positive metastatic breast cancer (mBC). Inotuzumab ozogamicin known under the trade name Besponsa^{®} targets CD22 and can be used for relapsed/refractory acute lymphoblastic leukemia. Polatuzumab vedotin known under the trade name Polivy^{®} targets CD79B can be used for relapsed/refractory diffuse large B-cell lymphoma. Enfortumab vedotin is known under the trade name Padcev^{®} and targets Nectin-4 and can be used for locally advanced or metastatic urothelial cancer. Trastuzumab deruxtecan, known under the trade name Enhertu^{®} targets HER2, and can be used for breast cancer, gastric cancer, and non-small cell lung cancer. Sacituzumab govitecan is known under the trade name Trodelvy^{®} and targets Trop-2 and can be used for breast cancer and urothelial carcinoma. Loncastuximab tesirine is known under the trade name Zynlonta^{®} and targets CD19 and can be used to treat large B-cell lymphoma and high-grade B-cell lymphoma. Belantamab mafodotin is known under the trade name Blenrep^{®} and binds to BCMA on myeloma cell surfaces causing cell cycle arrest and can be used to treat relapsed and refractory multiple myeloma. Moxetumomab pasudotox is known under the trade name Lumoxiti^{®} and targets CD22 and can be used for the treatment of adults with relapsed or refractory hairy cell leukemia (HCL). Tisotumab vedotin is known under the trade name Tivdak^{®} and can be used to treat cervical cancer. It is a combination of tisotumab, a monoclonal antibody against tissue factor, and monomethyl auristatin E (MMAE), a potent inhibitor of cell division. Mirvetuximab soravtansine is known under the trade name Elahere^{®} and targets FOLR1 and can be used to treat epithelial ovarian cancer, fallopian tube cancer, or primary peritoneal cancer. Datopotamab deruxtecan is known under the trade name Datroway^{®} and targets Trop-2 and can be used to treat breast cancer.

In addition to the above pharmaceutical compounds the pharmaceutical composition might comprise further compounds such as surfactants, stabilizers, buffers, osmotic agents, pH adjusters, lyophilization protectants, viscosity modifiers, antioxidants and chelating agents and preservatives.

According to another embodiment of the present invention a prefilled amber pharmaceutical glass container is provided, wherein the amber glass has a transmission throughout a wavelength range of from 290 nm to 450 nm of 25 % or less, measured at a thickness of 1.0 mm and has a transmission throughout a wavelength range from 590 nm to 610 nm of 45 % or more measured at a thickness of 1.0 mm, which is prefilled with a pharmaceutical composition, preferably comprising an ADC and even more preferably comprising Gemtuzumab ozogamicin, Brentuximab vedotin, Trastuzumab emtansine, Inotuzumab ozogamicin, Polatuzumab vedotin, Enfortumab vedotin, Trastuzumab deruxtecan, Sacituzumab govitecan, Belantamab mafodotin, Moxetumomab pasudotox, Loncastuximab tesirine, Tisotumab vedotin, Mirvetuximab soravtansine and/or Datopotamab deruxtecan.

Preferably the prefilled amber pharmaceutical glass container is a 2R or 10 R vial and more preferably has a physical stability in form of a ring tension of 1 Friedelgrad or less.

Although the present invention has been described with reference to preferred examples of embodiments, it is not limited thereto but can be modified in a variety of ways.

### Examples

Different amber pharmaceutical glass containers have been produced according to the method of the present invention and according to the prior art as set out in the examples below.

In a first step amber glass tubes have been provided with a length lₐ of 1500 mm, an outer diameter dₒ of 24 mm and a wll thickness WT of 1.0 mm. The amber glass tubes are amber borosilicate glass tubes having a glass composition comprising 60 to 85 wt.-% SiO₂, 5 to 20 wt.-% B₂O₃, 1 to 10 wt.-% Al₂O₃, 0.25 to 2 wt.-% Fe₂O₃, 0.5 to 10 wt.-% TiO₂, 2 to 10 wt.-% Na₂O, 0 to 5 wt.-% K₂O, 0 to 2 wt.-% BaO and 0 to 2 wt.-% CaO, based on all oxides present in the glass composition. The glass tubes are commercially available from SCHOTT under the trade name Fiolax^{®}braun and have a CTE of 5.4 * 10⁻⁶ K⁻¹, and a Tg of 550 °C. The glass tubes comprise Fe₂O₃ and TiO₂ in a ratio of between 1:3.80 to 1:4.00 based on the weight of the oxides. The

The amber glass tubes are hot formed into amber glass containers, wherein the amber glass containers are in the form of vials having with a size of 10R according to ISO 8362-1:2018.

Afterwards, the amber glass containers are heated at different temperatures at set out in the below table and are subsequent cooled to a temperature of 520 °C at a speed of 1.5 °C/s per 1.0 mm wall thickness of the amber glass container to obtain the amber pharmaceutical glass container. Several samples are prepared and measured according to the measurement methods set out below. The transmission at a wavelength of 450 nm and 590 nm below is the mean value of the measured samples. The ring tension is the maximal ring tension of the measured samples.

**Table 1: transmission values at different nm as well as ring tension of samples heated at different temperatures**

| heating temperature in °C | transmission at a wavelength of 450 nm (Wall thickness: 1 mm) (%) | transmission at a wavelength of 590 nm (Wall thickness: 1 mm) (%) | ring tension (Friedelgrad) |
|---|---|---|---|
| Prior heating | 13.5 | 54.0 | - |
| 540 | 11.3 | 50.4 | 3.0 |
| 550 | 10.5 | 49.0 | 2.0 |
| 560 | 10.5 | 49.0 | 1.0 |
| 570 | 10.2 | 48.7 | 0 |

From the above measurements it can be seen that heating the provided amber glass containers at temperatures of Tg or below and subsequent cooling to a temperature of 520 °C at a speed of 1.5 °C/s per 1.0 mm wall thickness of the amber glass container leads to amber glass containers that are not suitable for use in the pharmaceutical sector due to the high ring tension of these containers. Heating the provided amber glass containers at temperatures of Tg +10 °C and Tg + 20 °C and subsequent cooling to a temperature of 520 °C at a speed of 1.5 °C/s per 1.0 mm wall thickness of the amber glass container leads to amber pharmaceutical glass containers that can be used in the pharmaceutical sector due to the low ring tension of these containers. Furthermore, these containers fulfil the requirements of having a transmission throughout a wavelength range of from 290 nm to 450 nm of 12% or less, measured at a thickness of 1.0 mm and a transmission throughout a wavelength range from 590 nm to 610 nm of 45 % or more measured at a thickness of 1.0 mm.

### Measurement methods

### Neck squeeze test

The neck squeeze test load also known as the mechanical resistance of the vial neck section against diametral compression can determined by means of a diametral load strength testing adapted from DIN EN ISO 8113 ("Glass containers - Resistance to vertical load - Test methods"), where a compressive force is applied in diametral (radial) direction at two opposing positions of the vial neck outer surface geometry. The compressive force is increased at a constant load rate of 2000 N/min until breakage of the container using a universal testing machine (breakage can be detected as a sudden drop in the force-time diagram F(t)). The diametral load is applied by two opposing, uniaxial concave steel surfaces, between which the neck section of the vial is placed parallel to the axis. One of the concave surfaces is constructed to be self-adjusting to be able to compensate geometrical irregularities. The radius of the concavity of the two steel surfaces is 25% larger than the radius of the outer diameter of the neck section, so that the load is applied along two opposing lines. The width of the concave steel surfaces is chosen to be slightly shorter than the height of the vial neck section.

### Transmission

The transmission was measured with a spectrophotometer (LAMBDA 1050+ from PerkinElmer (double beam instrument with a wavelength selector (monochromator) and equipped with a photodiode detector; data collection is continuous)) for a glass processed into a thickness of 1 mm and having a mirror-finished surface. Sample preparation is done by cutting the amber pharmaceutical glass container with a circular saw fitted with a wet abrasive wheel. A section representative of the wall thickness is selected and trimed for mounting in the spectrophotometer. Each specimen is washed and dried carefully, in order to avoid scratching the surfaces. Before placing in the holder, the specimen is wiped with lens tissue. The specimen is placed in the spectrophotometer with its cylindrical axis parallel to the slit and in such a way that the light beam is perpendicular to the surface of the section and the losses due to reflection are at a minimum.

A measurement wavelength range was set to from 200 nm to 800 nm, a slit width was set to 5 nm, a scan speed was set to a medium speed, and a sampling pitch was set to 1 nm. It has been found that the wavelength of 450 nm is a wavelength at which the highest transmission in the wavelength range of from 290 nm to 450 nm is obtained. Therefore, in table 1 only a value for the "transmission at a wavelength of 450 nm (Wall thickness: 1 mm) (%)" is shown. Furthermore, it has been found that the wavelength of 590 nm is a wavelength at which the lowest transmission in the wavelength range of from 590 nm to 610 nm is obtained. Therefore, in table 1 only a value for the "transmission at a wavelength of 590 nm (Wall thickness: 1 mm) (%)" is shown.

### Chemical stability according to ISO 719:2020-09

According to the ISO 719 standard protocol, crushed glass grains are placed in contact with the purified, CO-free water at a temperature of 98° C at 1 atmosphere for 30 minutes. The solution is then titrated calorimetrically with dilute HCl to neutral pH. The amount of HCl required to titrate to a neutral solution is then converted to an equivalent of Na₂O extracted from the glass and reported in µg Na₂O per weight of glass with smaller values indicative of greater durability. The ISO 719 standard is broken into individual types. Type HGB1 is indicative of up to 31 ug extracted equivalent of Na2O; Type HGB2 is indicative of more than 31 µg and up to 62 µg extracted equivalent of Na2O; Type HGB3 is indicative of more than 62 ug and up to 264 ug extracted equivalent of Na2O; Type HGB4 is indicative of more than 264 µg and up to 620 µg extracted equivalent of Na2O; and Type HGB5 is indicative of more than 620 µg and up to 1085 µg extracted equivalent of Na2O.

### Chemical stability according to ISO 720:2020

According to the ISO 720 standard protocol utilizes crushed glass grains which are placed in contact with the purified, CO-free water under autoclave conditions (121 °C., 2 atm) for 30 minutes. The solution is then titrated calorimetrically with dilute HCl to neutral pH. The amount of HCl required to titrate to a neutral solution is then converted to an equivalent of Na₂O extracted from the glass and reported in µg Na₂O per weight of glass with smaller values indicative of greater durability. The ISO 720 standard is broken into individual types. Type HGA1 is indicative of up to 62 µg extracted equivalent of Na₂O per gram of glass tested; Type HGA2 is indicative of more than 62 µg and up to 527 µg extracted equivalent of Na₂O per gram of glass tested; and Type HGA3 is indicative of more than 527 µg and up to 930 µg extracted equivalent of Na₂O per gram of glass tested.

### Physical stability according to De Senarmont and Friedel

The amber pharmaceutical glass container is placed between a polarizer (Polarimeter PS-100-BS of Strainoptics) and a quarter wave plate at room temperature. Behind the quarter wave plate an analyzer (A-100 Analysator from Strainoptics) is positioned. Light with a wavelength of 565 nm is used. The direction of the analyzer is oriented congruent to the direction of the polarizer. The amber pharmaceutical glass container is oriented in such a way that the angle between the polarization direction and the main stress direction is 45°. Areas where the stress is parallel to the direction of the polarizer or analyzer appear dark (the so called isoclinics). The analyzer is rotated until the isoclinics disappear and the degree of rotation is measured.

### Burst pressure

The mechanical resistance against internal pressure of the vial, also known as the burst pressure, is determined by means of burst strength testing in accordance to DIN EN ISO 7458:2004 ("Glass containers - Internal pressure resistance - Test methods"), where a hydraulic pressure is applied from inside of the vial and is increased with a constant load rate of 5.8 bar/s until breakage of the container.

The hydraulic, internal pressure p was generated by application of a force F onto a piston-cylinder system filled with water (diameter D=10 mm) and was transferred into the amber pharmaceutical glass container via a high-pressure hose.

After breakage, the macroscopic fracture pattern of each amber pharmaceutical glass container was visually examined by means of fractography to determine the axial position of the fracture origin, where the reference position is set y=0 mm at the top of the amber pharmaceutical glass container.

### Axial load pressure

The mechanical resistance against axial compression of the vial, also known as axial load pressure is determined by means of vertical load strength testing in accordance to DIN EN ISO 8113:2004 ("Glass containers - Resistance to vertical load - Test methods"), where a compressive force is applied in axial direction and is increased with a constant load rate of 500 N/min until breakage of the container.

### List of reference numerals:

- 101: side wall of the vial
- 102: neck region of the vial
- 103: bottom of the vial
- 201: side wall of the syringe
- 202: neck region of the syringe
- 203: open bottom of the syringe
- 204: plunger of the syringe
- 301: side wall of the cartridge
- 302: neck region of the cartridge
- 303: open bottom of the cartridge
- s₁: wall thickness
- d₁: outer diameter
- d₂: inner diameter

## Claims

1. Method for producing an amber pharmaceutical glass container, the method comprising the steps of
a) providing an amber glass tube,
b) hot forming the amber glass tube into an amber glass container,
c) heating the amber glass container at a temperature of between Tg +5 °C to Tg +50 °C,
d) cooling the heated amber glass container of step c) to a temperature of between Tg -60 °C to Tg -10 °C at a speed of between 0.8 °C/s to 4 °C/s per 1.0 mm wall thickness of the amber glass container to obtain an amber pharmaceutical glass container.

2. The method for producing an amber pharmaceutical glass container according to claim 1, wherein the heating step c) is performed at a temperature of between Tg +8 °C to Tg +45 °C, preferably at a temperature of between Tg +10 °C to Tg +35 °C, and most preferably at a temperature of between Tg +12 °C to Tg + 30 °C.

3. The method for producing an amber pharmaceutical glass container according to any of the preceding claims, wherein the heating step c) is performed between 5 to 500 sec., more preferably between 10 to 300 sec, and even more preferably between 12 to 100 sec.

4. The method for producing an amber pharmaceutical glass container according to any of the preceding claims, wherein the cooling step d) is performed by
i) cooling the heated amber glass container of step c) to a temperature of between Tg -50 °C to Tg -15 °C, preferably to a temperature of between Tg -40 °C to Tg -20 °C and/or
ii) cooling the heated amber glass container of step c) at a speed of between 0.9 °C/s to 3 °C/s, preferably at a speed of between 1.0 °C/s to 2.5 °C/s and most preferably at a speed of between 1.0 °C/s to 2.0 °C/s, per 1.0 mm wall thickness of the amber glass container.

5. The method for producing an amber pharmaceutical glass container according to any of the preceding claims, wherein the amber glass tube provided in step a) has a transmission throughout a wavelength range of from 290 nm to 450 nm of 15.0% or less, preferably 14.5% or less, measured at a thickness of 1.0 mm and
has a transmission throughout a wavelength range from 590 nm to 610 nm of 50.0 % or more, preferably 52.5 % or more measured at a thickness of 1 mm.

6. The method for producing an amber pharmaceutical glass container according to any of the preceding claims, wherein the amber glass tube provided in step a) is an amber borosilicate glass tube, preferably an amber borosilicate glass tube comprising Fe₂O₃ and TiO₂ in the glass composition and most preferably the amber glass tube has a glass composition comprising 60 to 85 wt.-% SiO₂, 5 to 20 wt.-% B₂O₃, 1 to 10 wt.-% Al₂O₃, 0.25 to 2 wt.-% Fe₂O₃, 0.5 to 10 wt.-% TiO₂, 2 to 10 wt.-% Na₂O, 0 to 5 wt.-% K₂O, 0 to 2 wt.-% BaO, 0 to 2 wt.-% CaO, based on all oxides present in the glass composition.

7. An amber pharmaceutical glass container wherein the amber glass has
a transmission throughout a wavelength range of from 290 nm to 450 nm of 25 % or less, measured at a thickness of 1.0 mm and
has a transmission throughout a wavelength range from 590 nm to 610 nm of 45 % or more measured at a thickness of 1.0 mm.

8. The amber pharmaceutical glass container according to claim 7, having
i) a hydrolytic resistance **characterized by** an extracted Na₂O equivalent in µg per g glass determined according to ISO 719:2020-09 of not more than 62 µg/g, preferably of not more than 31 µg/g and/or
ii) a neck squeeze test load of at least 1100 N, preferably at least 1500 N, even more preferably at least 2000 N, and most preferably at least 3000 N and/or
iii) a ring tension of less than 5 Friedelgrad, preferably less than 4 Friedelgrad even more preferably less than 3 Friedelgrad, even more preferably less than 2 Friedelgrad and most preferably 1 Friedelgrad or less and/or
iv) a burst pressure from 20 to 80 bar, preferably from 30 to 70 bar and most preferably from 40 to 60 bar and/or
v) an axial load pressure from 1500 to 6000 N, preferably from 2000 to 5000 N and most preferably from 2500 to 4000 N.

9. The amber pharmaceutical glass container according to claims 7 or 8 wherein the amber glass of the amber pharmaceutical glass container has a glass composition comprising 60 to 85 wt.-% SiO₂, 5 to 20 wt.-% B₂O₃, 1 to 10 wt.-% Al₂O₃, 0.25 to 2 wt.-% Fe₂O₃, 0.5 to 10 wt.-% TiO₂, 2 to 10 wt.-% Na₂O, 0 to 5 wt.-% K₂O, 0 to 2 wt.-% BaO, 0 to 2 wt.-% CaO, based on all oxides present in the glass composition.

10. The amber pharmaceutical glass container according to claims 7 to 9, wherein the pharmaceutical container is a vial, preferably a 2R, 4R, 6R, 10R, 15R or 20R vial according to ISO 8362-1:2018 or a syringe, preferably a 0.5 ml, 1.1 ml, 1.5 ml, 2 ml, 2.25 ml, 3 ml or 5 ml syringe according to ISO 11040-4:2024.

11. The amber pharmaceutical glass container according to claims 7 to 10, wherein the pharmaceutical container is
i) a 2R or 4R vial according to ISO 8362-1:2018, having a transmission throughout a wavelength range of from 290 nm to 450 nm of 15% or less, measured at a thickness of 1.0 mm and a transmission throughout a wavelength range from 590 nm to 610 nm of 45 % or more measured at a thickness of 1.0 mm or
ii) a 6R or 8R vial according to ISO 8362-1:2018, having a transmission throughout a wavelength range of from 290 nm to 450 nm of 13% or less, measured at a thickness of 1.0 mm and a transmission throughout a wavelength range from 590 nm to 610 nm of 45 % or more measured at a thickness of 1.0 mm or
iii) a 10R or 15R vial according to ISO 8362-1:2018, having a transmission throughout a wavelength range of from 290 nm to 450 nm of 12% or less, measured at a thickness of 1.0 mm and a transmission throughout a wavelength range from 590 nm to 610 nm of 45 % or more measured at a thickness of 1.0 mm or
iv) a 20R vial according to ISO 8362-1:2018, with the exception that the wall thickness s₁ of the of the vial is 1.0 mm, having a transmission throughout a wavelength range of from 290 nm to 450 nm of 10% or less, measured at a thickness of 1.0 mm and a transmission throughout a wavelength range from 590 nm to 610 nm of 45 % or more measured at a thickness of 1.0 mm.

12. The amber pharmaceutical glass container according to claims 7 to 11, wherein the amber pharmaceutical container comprises a coating on at least a part of the surface of that container, preferably on the interior surface of that container, and preferably the coating is a hydrophobic coating comprising as significant component
i) a compound comprising the elements Si, C, O, and H along with further elements, the further elements having a content of less than 10 at%, said compound comprising a composition SiOₓ-C_{y}H_{z}, in which
x lies in the range of 0.6 to 0.9,
y lies in the range of 1.2 to 3.3, and
z lies in the range of 0.0 to 6.0 or
ii) SiO₂.

13. Use of the amber pharmaceutical glass container according to claims 7 to 12 for storing a pharmaceutical or cosmetical composition or drug and preferably for storing antibody-drug-conjugates.

14. Use of Fe₂O₃ and TiO₂ in a borosilicate glass as temperature dependent coloring system, wherein the Fe₂O₃ and TiO; are used in a ratio of between 1:3.00 to 1:5.00, preferably in a ratio of 1:3.50 to 1:4.50 and preferably in a ratio of between 1:3.80 to 1:4.00 based on the weight of the oxides.
